# EUROPÄISCHE PATENTSCHRIFT

(11) **EP 2 047 165 B1**
(45) Veröffentlichungstag und Bekanntmachung des Hinweises auf die Patenterteilung: **24.03.2010**
(21) Anmeldenummer: 07846595.2
(22) Anmeldetag: 15.11.2007
(51) Int. Cl.: F16L 11/115, B29C 49/24, F02B 33/44, B32B 27/28, B32B 7/02, B32B 1/08, B32B 27/12, B32B 7/04

(54) **ROHRFÖRMIGES FORMTEIL**
TUBULAR MOLDED PART
PIÈCE MOULÉE TUBULAIRE

(30) Priorität: 17.11.2006 DE 102006054268
(43) Veröffentlichungstag der Anmeldung: 15.04.2009
(73) Patentinhaber: ElringKlinger AG, 72581 Dettingen (DE); VERITAS AG, 63571 Gelnhausen (DE)
(72) Erfinder: BOCK, Stefan, 63762 Grossostheim (DE); SCHRAY, Roland, 74379 Ingersheim (DE); RÖSCH, Thomas, 63589 Linsengericht-Grossenhausen (DE)
(74) Vertreter: Hörner, Andreas
(86) Internationale Anmeldenummer: PCT/EP2007/009869
(87) Internationale Veröffentlichungsnummer: WO 2008/058732

(56) Entgegenhaltungen:
- EP-A- 0 748 972
- EP-A- 0 947 757
- EP-A- 1 013 979
- EP-A- 1 333 210
- EP-A- 1 396 670
- EP-A- 1 568 484
- WO-A-2006/015981
- DE-A1- 2 227 142
- DE-A1- 2 246 484
- DE-A1- 2 551 704
- DE-A1- 2 935 295
- DE-A1- 3 121 241
- DE-A1- 3 820 866
- DE-A1- 4 238 605
- DE-A1- 19 504 616
- US-A- 3 928 711
- US-A- 4 104 095
- US-A- 4 999 903
- US-A- 5 613 524
- US-A- 6 039 084
- US-A1- 2004 256 016
- US-A1- 2004 256 017
- DATABASE WPI Week 200049 Derwent Publications Ltd., London, GB; AN 2000-535596 XP002468044 & JP 2000 193152 A (TOYODA GOSEI KK) 14. Juli 2000 (2000-07-14)
- DATABASE WPI Week 200420 Derwent Publications Ltd., London, GB; AN 2004-205791 XP002468045 & JP 2003 214565 A (MARUGO GUMU KOGYO KK) 30. Juli 2003 (2003-07-30)
- DATABASE WPI Week 198147 Derwent Publications Ltd., London, GB; AN 1981-86390D XP002477829 & JP 56 130316 A (TOYO POLYMER KK) 13. Oktober 1981 (1981-10-13)
- DATABASE WPI Week 200561 Derwent Publications Ltd., London, GB; AN 2005-593545 XP002478014 & JP 2005 214375 A (NISSAN DIESEL KOGYO KK) 11. August 2005 (2005-08-11)

## Beschreibung

Die vorliegende Erfindung betrifft ein rohrförmiges Formteil mit einer Wandung.

Rohrförmige Formteile aus Kunststoff werden beispielsweise als kaltseitige Ladeluftleitung zwischen einem Ladeluftauslass eines Ladeluftkühlers und einem Ladelufteinlass eines Verbrennungsmotors mit Abgasturbolader verwendet, um die in dem Ladeluftkühler gekühlte Ladeluft dem Verbrennungsmotor zuzuführen.

Ein rohrförmiges Formteil gemäß dem Oberbegriff von Anspruch 1 wird in der DE 22 27 142 A1 offenbart.

Der vorliegende Erfindung liegt die Aufgabe zugrunde, ein rohrförmiges Formteil mit einer Wandung zu schaffen, das eine hohe Druckfestigkeit und eine hohe mechanische Stabilität bei guter Temperaturbeständigkeit und guter chemischer Beständigkeit aufweist.

Diese Aufgabe wird durch ein rohrförmiges Formteil nach Anspruch 1 gelöst.

Dadurch, dass die Wandung eine ein Fluorpolymermaterial enthaltende Kunststoffschicht umfasst, weist das rohrförmige Formteil eine hohe chemische Beständigkeit und eine gute Temperaturbeständigkeit auf.

Dadurch, dass die Wandung eine Verstärkungsschicht umfasst, weist das rohrförmige Formteil eine gute Druckbeständigkeit und hohe mechanische Festigkeit auf.

Dadurch, dass die Kunststoffschicht und die Verstärkungsschicht zu einem Verbund zusammengefasst sind, ist das rohrförmige Formteil in einfacher Weise handhabbar und montierbar, äußerst robust und bruchunanfällig.

Bei einer bevorzugten Ausgestaltung der Erfindung ist vorgesehen, dass die Verstärkungsschicht die Kunststoffschicht zumindest teilweise umgibt.

Vorzugsweise bildet die Kunststoffschicht die innerste Schicht des Verbundes, welche den Innenraum des rohrförmigen Formteils umschließt und mit dem durch das rohrförmige Formteil hindurchgeleiteten Fluid in Kontakt kommt.

Die Kunststoffschicht ist vorzugsweise selbsttragend, insbesondere als selbsttragendes Kunststoffrohr, ausgebildet.

Auch die Verstärkungsschicht ist vorzugsweise sebsttragend ausgebildet.

Ferner kann vorgesehen sein, dass die Verstärkungsschicht ein Gewebe, Gewirke, Gestrick, Gewirr oder Geflecht oder eine Wicklung umfasst.

Insbesondere kann die Verstärkungsschicht einen gewobenen, gestrickten, gewirkten oder gewickelten Stützschlauch umfassen.

Die Verstärkungsschicht ist vorzugsweise aus Fasern, die den Temperaturen bei der Herstellung des rohrförmigen Formteils und im Betrieb desselben standhalten, ausgebildet. Insbesondere kann die Verstärkungsschicht ein Glasfasermaterial, ein Kohlefasermaterial, ein Aramidfasermaterial und/oder ein Fasermaterial aus einem thermoplastischen Kunststoffmaterial enthalten.

Um eine innige stoffschlüssige Verbindung zwischen der Kunststoffschicht und der Verstärkungsschicht herzustellen, kann zwischen der Kunststoffschicht und der Verstärkungsschicht eine Verbindungsschicht angeordnet sein.

Diese Verbindungsschicht enthält vorzugsweise ein thermoplastisches Kunststoffmaterial.

Insbesondere kann vorgesehen sein, dass die Verbindungsschicht ein Fluorthermoplastmaterial, insbesondere PFA (Perfluoralkoxy-Copolymer), FEP (Perfluorethylenpropylen-Copolymer), MFA (Tetrafluorethylen-Perfluormethylvinylether) oder modifiziertes Polytetrafluorethylen (PTFE) enthält.

Dabei ist unter einem "modifizierten Polytetrafluorethylen" ein Polytetrafluorethylen-ähnlicher Stoff zu verstehen, bei welchem die Moieküistruktur des Polytetrafluorethylen (PTFE) dadurch chemisch modifiziert worden ist, dass neben Tetrafluorethylen noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Damit das rohrförmige Formteil eine ausreichende Flexibilität aufweist, um Relativbewegungen zwischen seinen beiden Enden ausgleichen zu können, ist es günstig, wenn das Formteil mindestens eine flexible Zone aufweist.

Um die gewünschte Formflexibilität der flexiblen Zone des Formteils bereitzustellen, kann insbesondere vorgesehen sein, dass die flexible Zone einen gewellten Bereich, vorzugsweise einen Faltenbalg, umfasst.

Ferner kann das Formteil auch mindestens eine formstabile, steife Zone umfassen.

Die steife, formstabile Zone des Formteils kann mindestens einen gekrümmten Abschnitt aufweisen.

Das erfindungsgemäße rohrförmige Formteil kann grundsätzlich in beliebiger Weise hergestellt werden, beispielsweise in einem Spritzverfahren.

Vorzugsweise ist das rohrförmige Formteil jedoch blasgeformt.

Je höher die Umformtemperatur gewählt wird, desto geringer ist bei dem ausgeformten Formteil der Memory-Effekt, d.h. die Rückformneigung des ausgeformten Formteils bei Erwärmung.

Besonders günstig ist es daher, wenn das Formteil bei einer Temperatur oberhalb der Kristallitschmelztemperatur des Ausgangsmaterials der Kunststoffschicht geformt ist.

Die Kunststoffschicht kann beispielsweise aus reinem Polytetrafluorethylen und/oder modifiziertem Polytetrafluorethylen gebildet sein.

Alternativ hierzu kann auch vorgesehen sein, dass die Kunststoffschicht aus einem Polytetrafluorethylen-Compound und/oder aus einem modifizierten

Polytetrafluorethylen-Compound gebildet ist, d.h. aus einem Gemisch von Polytetrafluorethylen bzw. modifiziertem Polytetrafluorethylen und mindestens einem organischen oder anorganischen Füllstoff.

Um das Formteil schwarz einzufärben, kann insbesondere vorgesehen sein, dass das Polytetrafluorethylen-Compound oder das modifizierte Polytetrafluorethylen-Compound ein Schwarzpigment, vorzugsweise Ruß, enthält.

Das erfindungsgemäße Formteil ist vorzugsweise bei einer Betriebstemperatur von mindestens 200°C, vorzugsweise von mindestens 250°C, thermisch stabil.

Ferner ist es von Vorteil, wenn das erfindungsgemäße Formteil bei einem Betriebsinnendruck von mindestens 2 bar, vorzugsweise von mindestens 2,5 bar, mechanisch stabil ist.

Das Formteil weist mindestens einen Verbundabschnitt, in welchem die Verstärkungsschicht und die Kunststoffschicht in einem Festverbund miteinander verbunden sind, und mindestens einen Nicht-Verbundabschnitt, in welchem die Verstärkungsschicht und die Kunststoffschicht nicht in einem Festverbund miteinander verbunden sind, auf.

Bei einer solchen Ausgestaltung des Formteils ist die Verstärkungsschicht in dem Nicht-Verbundabschnitt relativ zu der Kunststoffschicht beweglich, so dass das Formteil im Nicht-Verbundabschnitt eine erhöhte Flexibilität aufweisen kann.

Durch den Festverbund zwischen der Verstärkungsschicht und der Kunststoffschicht im Verbundabschnitt wird aber dennoch im Verbundabschnitt eine gute Abstützung der Kunststoffschicht in radialer Richtung und in axialer Richtung erzielt.

Insbesondere kann vorgesehen sein, dass in mindestens einem Nicht-Verbundabschnitt die Verstärkungsschicht die Kunststoffschicht lose umschließt.

Bei einer bevorzugten Ausgestaltung der Erfindung ist vorgesehen, dass das Formteil mindestens zwei Verbundabschnitte aufweist, zwischen denen ein Nicht-Verbundabschnitt angeordnet ist.

Insbesondere kann vorgesehen sein, dass die Verstärkungsschicht eines ersten Verbundabschnitts und die Verstärkungsschicht eines zweiten Verbundabschnitts einstückig miteinander ausgebildet sind. Hierdurch ist es möglich, auch die Kunststoffschicht in dem zwischen den beiden Verbundabschnitten liegenden Nicht-Verbundabschnitt durch Einleitung von Kräften in die einteilige Verstärkungsschicht in axialer Richtung abzustützen.

Wenn mindestens ein Verbundabschnitt an einem Endbereich des Formteils angeordnet ist, so bietet dies den Vorteil, dass bei der Anbindung des Formteils an ein angrenzendes Bauteil, insbesondere ein Rohrstutzen, eine verbesserte Klemmwirkung erzielt wird.

Wenn das Formteil mindestens eine flexible Zone aufweist, so ist vorzugsweise mindestens ein Nicht-Verbundabschnitt in der flexiblen Zone angeordnet, um die Flexibilität dieser flexiblen Zone zu erhöhen.

Besonders günstig ist, wenn der Nicht-Verbundabschnitt die flexible Zone im wesentlichen vollständig umfasst.

Wenn das Formteil mindestens eine steife Zone aufweist, so ist vorzugsweise mindestens ein Verbundabschnitt in der steifen Zone angeordnet. Auf diese Weise wird die Kunststoffschicht in der steifen Zone besonders gut in axialer und in radialer Richtung abgestützt.

Besonders günstig ist es, wenn ein Verbundabschnitt die steife Zone im wesentlichen vollständig umfasst.

Bei einer bevorzugten Ausgestaltung der Erfindung ist vorgesehen, dass in mindestens einem Verbundabschnitt die Verstärkungsschicht stoffschlüssig relativ zu der Kunststoffschicht festgelegt ist.

Dies kann beispielsweise dadurch erfolgen, dass in mindestens einem Verbundabschnitt die Verstärkungsschicht mittels eines thermoplastischen Schmelzklebers, insbesondere mittels eines thermoplastischen Fluorkunststoffs, mit der Kunststoffschicht verschweißt ist.

Als thermoplastischer Schmelzkleber kann beispielsweise PFA (Perfluoralkoxy-Copolymer), FEP (Perfluorethylenpropylen-Copolymer), MFA (Tetrafluorethylen-Perfluormethylvinylether) oder ein thermoplastisch verarbeitbares Polytetrafluorethylen-Material (PTFE) verwendet werden.

Dabei ist das thermoplastisch verarbeitbare PTFE-Material vorzugsweise ein TFE-Copolymer, wobei der Co-Monomer-Anteil vorzugsweise 3,5 Mol-% oder weniger beträgt, insbesondere weniger als 3 Mol-%, weiter bevorzugt weniger als 1 Mol-%.

Das Co-Monomer kann insbesondere ausgewählt sein aus Hexafluoropropylen, Perfluoro(alkylvinylether), Perfluoro-(2,2-dimethyl-1,3-dioxol) und Chlorotrifluoroethylen.

Beispiele solcher geeigneter thermoplastischer PTFE-Materialien sind in der WO 00/08071 und in der WO 01/60911 offenbart, auf welche in dieser Hinsicht Bezug genommen wird.

Ferner kann das verwendete thermoplastisch verarbeitbare PTFE-Material eine Polymermischung sein, welche PTFE und einen thermoplastisch verarbeitbaren Kunststoff umfasst.

Alternativ oder ergänzend zu einem Verschweißen der Verstärkungsschicht und der Kunststoffschicht mittels eines thermoplastischen Schmelzklebers kann vorgesehen sein, dass in mindestens einem Verbundabschnitt die Verstärkungsschicht an die Kunststoffschicht anvulkanisiert ist.

Alternativ oder ergänzend zu einem Anschweißen oder Anvulkanisieren der Verstärkungsschicht an die Kunststoffschicht kann ferner vorgesehen sein, dass an mindestens einem Verbundabschnitt die Verstärkungsschicht mittels eines Klebers mit der Kunststoffschicht verklebt ist.

Alternativ hierzu kann auch vorgesehen sein, dass mindestens ein Verbundabschnitt des Formteils durch Formteilspritzen, vorzugsweise aus einem Fluorkunststoffmaterial, gebildet ist, wobei die Verstärkungsschicht vorzugsweise im selben Arbeitsgang mit der durch Formteilspritzen gebildeten Kunststoffschicht verbunden wird.

Um die Druckfestigkeit und die mechanische Stabilität des erfindungsgemäßen Formteils zu erhöhen, kann vorgesehen sein, dass das Formteil mit mindestens einem Verstärkungsring versehen ist.

Besonders günstig ist es, wenn mindestens ein Verstärkungsring in einem Nicht-Verbundabschnitt des Formteils angeordnet ist. Hierdurch wird eine Abstützung der Kunststoffschicht im Nicht-Verbundabschnitt in radialer Richtung erzielt.

Mindestens ein Verstärkungsring kann zwischen der Kunststoffschicht und der Verstärkungsschicht angeordnet sein.

Alternativ oder ergänzend hierzu kann auch vorgesehen sein, dass mindestens ein Verstärkungsring die Verstärkungsschicht umschließt.

Bei einer bevorzugten Ausgestaltung der Erfindung ist vorgesehen, dass das Formteil mit mehreren Verstärkungsringen versehen ist, welche in der Längsrichtung des Formteils voneinander beabstandet sind.

Dabei können mindestens zwei Verstärkungsringe durch Verbindungselemente, beispielsweise durch Drähte oder Stahlseile, miteinander verbunden sein, um zusätzlich zu der radialen Abstützung auch eine axiale Abstützung mittels der Verstärkungsringe zu erzielen.

Die Verbindungselemente, beispielsweise Drähte oder Stahlseile, können insbesondere an die Verstärkungsringe geklemmt oder mit denselben verschweißt sein.

Um einen Verstärkungsring auch nach der Ausformung der Kunststoffschicht des Formteils formschlüssig mit der Kunststoffschicht verbinden zu können, ist es günstig, wenn mindestens ein Verstärkungsring mehrteilig ausgebildet ist.

Die mehreren Teile des Verstärkungsrings können dabei beispielsweise zusammengesteckt und miteinander verrastet werden.

Wenn in mindestens einem Nicht-Verbundabschnitt des Formteils die Verstärkungsschicht ein Stützmaterial in Form eines Gewebes, Gewirkes, Gestricks, Gewirrs, Geflechts oder einer Wicklung umfasst, so ist dieses Stützmaterial vorzugsweise mit einer Gummierung versehen, um ein Aufspleißen von in einem solchen Stützmaterial vorhandenen Fasern zu verhindern.

Das erfindungsgemäße rohrförmige Formteil eignet sich insbesondere zur Verwendung in einer Baugruppe, die einen Abgasturbolader und einen Ladeluftkühler für einen Verbrennungsmotor und einen den Abgasturbolader mit einem Ladelufteinlass des Ladeluftkühlers verbindende heißseitige Ladeluftleitung umfasst, wobei die heißseitige Ladeluftleitung ein erfindungsgemäßes rohrförmiges Formteil umfasst.

Das erfindungsgemäße rohrförmige Formteil ist einfach herstellbar, handhabbar und montierbar und weist eine hohe Temperaturbeständigkeit sowie eine hohe dynamische mechanische Beständigkeit auf, so dass ein solches rohrförmiges Formteil überraschenderweise auch den hohen Einsatztemperaturen und Einsatzdrücken in einer heißseitigen Ladeluftleitung gewachsen ist.

Insbesondere dann, wenn die Kunststoffschicht des Formteils PTFE oder modifiziertes PTFE enthält, ist das erfindungsgemäße Formteil für niedrige Temperaturen bis zu -50°C und für hohe Temperaturen bis zu ungefähr 300°C geeignet und dynamisch hoch belastbar. Die aus einem solchen Formteil gebildete Ladeluftleitung weist eine sehr gute Biegewechselfestigkeit und eine hohe akustische Eigendämpfung sowie eine universelle chemische Beständigkeit gegen Blow-By-Gase und motortypische Medien, wie beispielsweise Öle, Fette, Bremsflüssigkeit und Streusalz, auf.

Das erfindungsgemäße rohrförmige Formteil ist einfach, prozesssicher und kostengünstig herstellbar und bei der Montage in einfacher Weise handhabbar.

Das Formteil ist an seinen Enden plastisch und/oder elastisch verformbar, um das Formteil direkt und fluiddicht mit angrenzenden Aggregaten, beispielsweise mit einem Abgasturbolader und einem Ladeluftkühler, zu verbinden.

Der vorliegenden Erfindung liegt die weitere Aufgabe zugrunde, ein Verfahren zum Herstellen eines rohrförmigen Formteils zu schaffen, durch welches ein Formteil mit hoher Druckfestigkeit und hoher mechanischer Stabilität bei zugleich guter Temperaturbeständigkeit und guter chemischer Beständigkeit herstellbar ist.

Diese Aufgabe wird erfindungsgemäß durch ein Verfahren gelöst, das die folgenden Verfahrensschritte umfasst:
- Erzeugen eines rohrförmigen Formteil-Rohlings aus einem ein Fluorpolymermaterial enthaltenden Material;
- Verbinden eines Stützschlauchs mit dem Formteil-Rohling zu einem Festverbund in mindestens einem Verbundabschnitt, wobei der Stützschlauch in mindestens einem Nicht-Verbundabschnitt nicht mit dem Formteil-Rohling zu einem Festverbund verbunden wird.

Dabei kann insbesondere vorgesehen sein, dass der Stützschlauch in mindestens einem Verbundabschnitt mittels eines thermoplastischen Schmelzklebers mit dem Formteil-Rohling verschweißt wird.

Alternativ oder ergänzend hierzu kann vorgesehen sein, dass der Stützschlauch in mindestens einem Verbundabschnitt an den Formteil-Rohling anvulkanisiert wird.

Alternativ oder ergänzend zu einem Anschweißen oder Anvulkanisieren des Stützschlauchs an den Formteil-Rohling kann auch vorgesehen sein, dass der Stützschlauch in mindestens einem Verbundabschnitt mittels eines Klebers mit dem Formteil-Rohling verklebt wird.

Der Formteil-Rohling kann beispielsweise durch Blasformen erzeugt werden.

Bei einer möglichen Ausgestaltung der Erfindung wird der Stützschlauch erst nach der Erzeugung des Formteil-Rohlings mit dem Formteil-Rohling verbunden. Dies bietet den Vorteil, dass die Ausformung des Formteil-Rohlings nicht durch den Stützschlauch behindert wird.

Alternativ hierzu kann auch vorgesehen sein, dass der Stützschlauch während der Erzeugung des Formteil-Rohlings mit dem Formteil-Rohling verbunden wird; hierdurch wird ein zusätzlicher Arbeitsgang zum Verbinden des Stützschlauchs mit dem Formteil-Rohling eingespart.

Ferner kann vorgesehen sein, dass der Formteil-Rohling zumindest teilweise durch Formteilspritzen erzeugt wird; hierbei kann der Stützschlauch im selben Arbeitsgang mit dem durch Formteilspritzen erzeugten Formteil-Rohling verbunden werden.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: ein schematisches Blockschaltbild eines Verbrennungsmotors mit Abgasturbolader und Ladeluftkühler;
- Fig. 2: einen schematischen Längsschnitt durch ein rohrförmiges Formteil mit einer Kunststoffschicht und einer Verstärkungsschicht, das eine den Abgasturbolader mit einem Ladelufteinlass des Ladeluft- kühlers verbindende heißseitige Ladeluftleitung bildet;
- Fig. 3: einen schematischen Querschnitt durch das Formteil aus Fig. 2, längs der Linie 3-3 in Fig. 2;
- Fig. 4: einen schematischen Längsschnitt durch eine zweiteilige Blasform und einen in die Blasform eingelegten Kunststoffschlauch und einen Stützschlauch vor einem Blasformvorgang, bei geöffneter Blasform;
- Fig. 5: einen schematischen Längsschnitt durch die Blasform aus Fig. 4 mit dem eingelegten Kunststoffschlauch und dem eingelegten Stützschlauch vor einem Blasformvorgang, bei geschlossener Blasform;
- Fig. 6: einen schematischen Längsschnitt durch die Blasform aus den Fig. 4 und 5 mit dem ausgeformten Formteil nach dem Abschluss des Blasformvorgangs;
- Fig. 7: einen schematischen Längsschnitt durch eine zweite Ausführungs- form eines rohrförmigen Formteils mit einer Kunststoffschicht und einer Verstärkungsschicht, wobei die Kunststoffschicht und die Verstärkungsschicht nur in zwei Verbundabschnitten in einem Festverbund miteinander verbunden sind, während die Verstär- kungsschicht in einem zwischen den Verbundabschnitten liegen- den Nicht-Verbundabschnitt die Kunststoffschicht lose umschließt;
- Fig. 8: einen schematischen Längsschnitt durch einen Formteil-Rohling, der noch nicht mit der Verstärkungsschicht verbunden ist;
- Fig. 9: einen schematischen Längsschnitt durch eine zweiteilige Blasform und einen in die Blasform eingelegten Kunststoffschlauch und eingelegte Verstärkungsringe vor einem Blasformvorgang, bei geöffneter Blasform;
- Fig. 10: einen schematischen Längsschnitt durch die Blasform aus Fig. 9 mit dem eingelegten Kunststoffschlauch und den eingelegten Ver- stärkungsringen vor dem Blasformvorgang, bei geschlossener Blasform;
- Fig. 11: einen schematischen Längsschnitt durch die Blasform aus den Fig. 9 und 10 mit dem ausgeformten Formteil-Rohling und den daran angeordneten Verstärkungsringen, nach Abschluss des Blasformvorgangs;
- Fig. 12: einen schematischen Längsschnitt durch eine dritte Ausführungs- form eines rohrförmigen Formteils mit einer Kunststoffschicht und einer Verstärkungsschicht, welche in einem Nicht-Verbundab- schnitt die Kunststoffschicht lose umschließt, wobei in dem Nicht- Verbundabschnitt mehrere mehrteilige Verstärkungsringe an- geordnet sind, welche die Verstärkungsschicht von außen um- schließen;
- Fig. 13: einen schematischen Querschnitt durch den Nicht-Verbundab- schnitt des Formteils aus Fig. 12 und einen an dem Nicht-Ver- bundabschnitt anzuordnenden mehrteiligen Verstärkungsring, vor dem Zusammensetzen des Verstärkungsrings;
- Fig. 14: einen schematischen Querschnitt durch den Nicht-Verbundab- schnitt des Formteils aus Fig. 12 und einen daran angeordneten, die Verstärkungsschicht von außen umschließenden mehrteiligen Verstärkungsring im zusammengesetzten Zustand;
- Fig. 15: einen schematischen Längsschnitt durch eine vierte Ausführungs- form eines rohrförmigen Formteils mit einer Kunststoffschicht und einer Verstärkungsschicht, welche in einem Nicht-Verbundab- schnitt des Formteils die Kunststoffschicht lose umschließt, wobei in dem Nicht-Verbundabschnitt mehrere Verstärkungsringe angeordnet sind, welche die Verstärkungsschicht von außen um- geben und außerhalb der Verstärkungsschicht miteinander ver- bunden sind;
- Fig. 16: einen schematischen Längsschnitt durch eine fünfte Ausführungs- form eines rohrförmigen Formteils mit einer Kunststoffschicht und einer Verstärkungsschicht, welche in einem Nicht-Verbundab- schnitt des Formteils die Kunststoffschicht lose umschließt, wobei in dem Nicht-Verbundabschnitt äußere Verstärkungsringe, welche die Verstärkungsschicht von außen umgeben und untereinander verbunden sind, und innere Verstärkungsringe, welche zwischen der Kunststoffschicht und der Verstärkungsschicht vorgesehen sind, angeordnet sind; und
- Fig. 17: einen schematischen Längsschnitt durch eine sechste Ausfüh- rungsform eines rohrförmigen Formteils mit einer Kunststoff- schicht und einer Verstärkungsschicht, welche in einem Nicht- Verbundabschnitt des Formteils die Kunststoffschicht lose um- schließt, wobei in dem Nicht-Verbundabschnitt keine Verstär- kungsringe vorgesehen sind.

Gleiche oder funktional äquivalente Elemente sind in allen Figuren mit denselben Bezugszeichen bezeichnet.

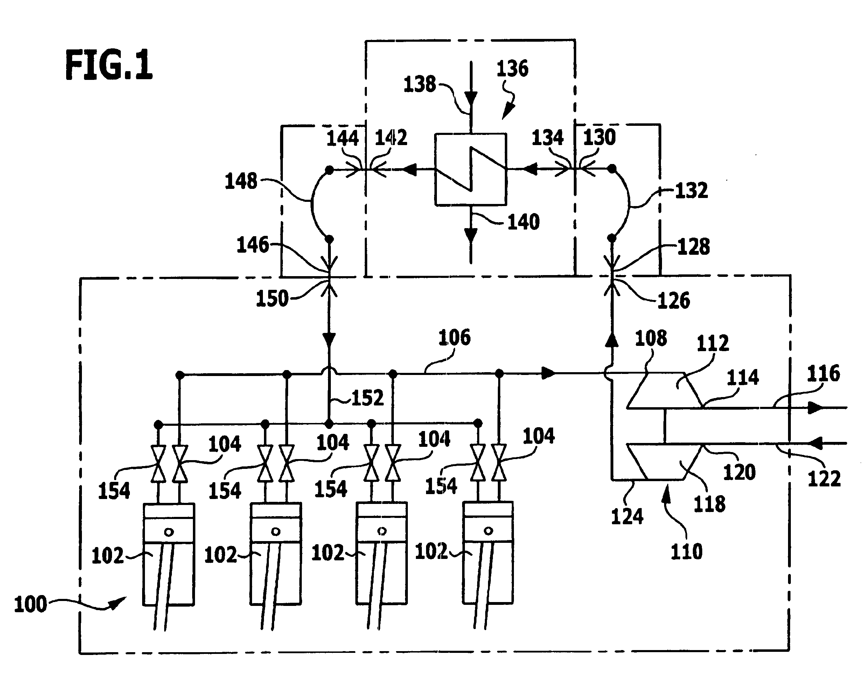

Ein in Fig. 1 als Ganzes mit 100 bezeichneter Verbrennungsmotor umfasst mehrere, beispielsweise vier, Zylinder 102, von denen jeder über ein Auslassventil 104 an einen Abgaskanal 106 angeschlossen ist, welcher zu einem Abgaseintritt 108 eines Abgasturboladers 110 führt. Das vom Verbrennungsmotor 100 kommende Abgas treibt in dem Abgasturbolader 110 ein abgasseitiges Schubrad 112 an und verlässt dann den Abgasturbolader 110 über einen Abgasauslass 114, an den eine Abgasleitung 116 angeschlossen ist.

Das abgasseitige Schubrad 112 treibt ein ladeluftseitiges Schubrad 118 an, welches über einen Lufteinlass 120 aus einer Ansaugluftleitung 122 in die Ladeluftseite des Abgasturboladers 110 eintretende Luft verdichtet und beschleunigt.

Durch einen Luftauslasskanal 124 gelangt die verdichtete Ladeluft zu einem mit einem Schnellkupplungsanschluss versehenen Ladeluftauslass 126 des Abgasturboladers 110.

Der Ladeluftauslass 126 ist über eine an beiden Enden mit jeweils einem Schnellkupplungsanschluss 128, 130 versehene heißseitige Ladeluftleitung 132 mit einem mit einem Schnellkupplungsanschluss versehenen Ladelufteinlass 134 eines Ladeluftkühlers 136 verbunden.

In der heißseitigen Ladeluftleitung 132 weist die Ladeluft einen Druck im Bereich von beispielsweise ungefähr 2,5 bar bis ungefähr 3 bar und eine Temperatur im Bereich von ungefähr 200°C bis ungefähr 250°C auf.

Der Ladeluftkühler 136 ist ein Wärmetauscher, in welchem die Ladeluft mittels von einem Kühler des Kraftfahrzeugs her kommender Kühlluft gekühlt wird.

Diese Kühlluft tritt durch einen Kühllufteinlass 138 in die Kühlluftseite des Ladeluftkühlers 136 ein, nimmt Wärme aus der Ladeluft auf und tritt durch einen Kühlluftauslass 140 wieder aus dem Ladeluftkühler 136 aus.

Die auf eine Temperatur von beispielsweise ungefähr 145°C gekühlte und einen Druck von beispielsweise ungefähr 1,5 bar aufweisende Ladeluft verlässt die Ladeluftseite des Ladeluftkühlers 136 durch einem mit einem Schnellkupplungsanschluss versehenen Ladeluftauslass 142, an den eine an ihren beiden Enden mit jeweils einem Schnellkupplungsanschluss 144, 146 versehene kaltseitige Ladeluftleitung 148 angeschlossen ist, welche den Ladeluftkühler 136 mit einem Ladelufteinlass 150 des Verbrennungsmotors 100 verbindet, der ebenfalls mit einem Schnellkupplungsanschluss versehen ist.

Von dem Ladelufteinlass 150 des Verbrennungsmotors 100 führt ein sich Verzweigender Luftzuführkanal 152 zu Einlassventilen 154 der Zylinder 102 des Verbrennungsmotors 100.

Der Ladeluftkühler 136 ist mit der Karosserie des Kraftfahrzeugs verbunden, während der Verbrennungsmotor 100 und der daran angeordnete Abgasturbolader 110 von der Karosserie schwingungsentkoppelt gelagert sind.

Der Ladeluftauslass 126 des Abgasturboladers 110 einerseits und der Ladelufteinlass 134 des Ladeluftkühlers 136 andererseits bewegen sich daher im Betrieb des Verbrennungsmotors 100 relativ zueinander, weshalb die heißseitige Ladeluftleitung 132 eine ausreichende Flexibilität aufweisen muss, um die Relativbewegungen ihres turboladerseitigen Endes und ihres ladeluftkühlerseitigen Endes ausgleichen zu können.

Der Abgasturbolader 110, der Ladeluftkühler 136 und die den Abgasturbolader 110 mit dem Ladelufteinlass 134 des Ladeluftkühlers 136 verbindende heißseitige Ladeluftleitung 132 bilden somit eine schwingungsfähige Baugruppe 156.

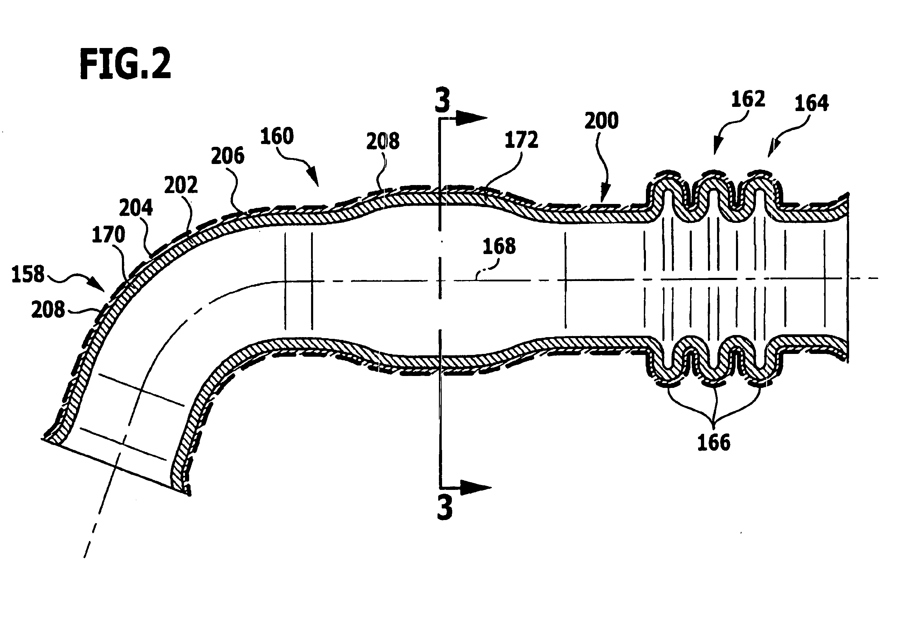

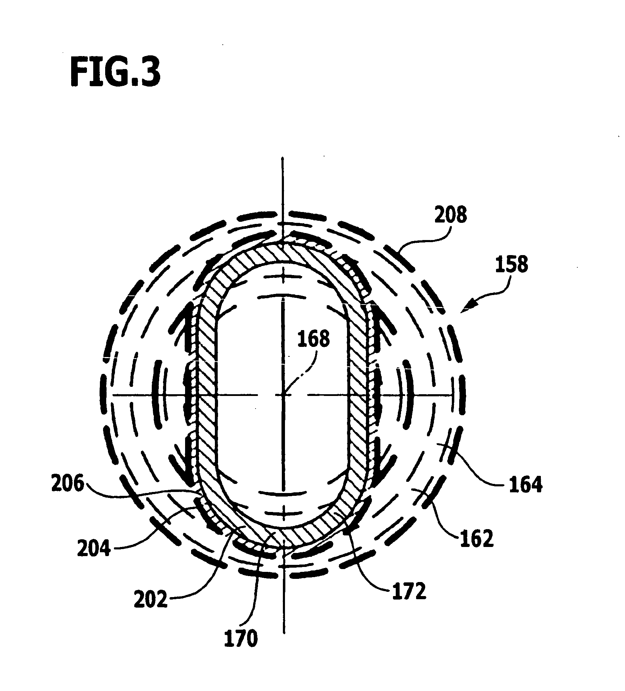

Die heißseitige Ladeluftleitung 132 ist durch ein einstückiges Formteil 158 gebildet, welches in den Fig. 2 und 3 im einzelnen dargestellt ist.

Das rohrförmige Formteil 158 weist eine dem Abgasturbolader 110 zugewandte steife Zone 160 und eine dem Ladeluftkühler 136 zugewandte flexible Zone 162 auf.

Die flexible Zone 162 umfasst einen Faltenbalg 164 mit mehreren, beispielsweise drei, ringförmigen Falten 166, welche sowohl eine Dehnung oder ein Stauchen der flexiblen Zone 162 längs der Rohrlängsachse 168 als auch eine Verkippung der Rohrlängsachse 168 im Bereich der flexiblen Zone 162 ermöglichen.

Die steife Zone 160 des Formteils 158 ist hingegen im wesentlichen formstabil.

Die steife Zone 160 kann einen gekrümmten Abschnitt 170 aufweisen.

Ferner kann die steife Zone 160 einen beispielsweise zwischen dem gekrümmten Abschnitt 170 und der flexiblen Zone 162 angeordneten Abschnitt 172 mit einem ovalen Querschnitt (siehe Fig. 3) aufweisen.

Außerhalb des Abschnitts 172 mit ovalem Querschnitt und des gekrümmten Abschnitts 170 ist das rohrförmige Formteil 158 im wesentlichen rotationssymmetrisch bezüglich der Rohrlängsachse 168 ausgebildet.

Das Formteil 158 weist eine Wandung 200 auf, die als ein Verbund aus einer innenliegenden Kunststoffschicht 202, einer außenliegenden Verstärkungsschicht 204 und einer dazwischenliegenden, die Verstärkungsschicht 204 mit der Kunststoffschicht 202 verbindenden Verbindungsschicht 206 gebildet ist.

Die Kunststoffschicht 202 ist einstückig aus einem PTFE, modifiziertes PTFE, PFA (Perfluoralkoxy-Copolymer) oder ein anderes teil- oder vollfluoriertes Kunststoffmaterial in reiner Form oder in einem Gemisch mit Füllstoffen enthaltenden Material gebildet, das bei den in der heißseitigen Ladeluftleitung 132 herrschenden Betriebsdrücken von beispielsweise ungefähr 2,5 bar bis ungefähr 3 bar mechanisch stabil und bei den in der heißseitigen Ladeluftleitung 132 herrschenden Betriebstemperaturen von ungefähr 200°C bis ungefähr 250°C thermisch stabil ist.

Vorzugsweise ist die Kunststoffschicht 202 aus einem PTFE-Compound oder aus einem modifizierten PTFE-Compound gebildet.

Dieses PTFE-Compound bzw. modifizierte PTFE-Compound kann ein Schwarzpigment, vorzugsweise Ruß, in einer Menge von bis zu 10 Gewichtsprozent enthalten, um die Kunststoffschicht 202 schwarz einzufärben.

Die Verstärkungsschicht 204, welche zur Erhöhung der Druckfestigkeit und der mechanischen Stabilität des Formteils 158 dient, kann als ein Gewebe, Gewirke, Gestrick, Gewirr oder Geflecht aus Fasern, die den Temperaturen bei der Herstellung des Formteils 158 und im Betrieb der heißseitigen Ladeluftleitung 132 standhalten, ausgebildet sein.

Insbesondere kommen hierfür Glasfasern, Kohlefasern, Aramidfasern oder Fasern aus einem hochschmelzenden, thermoplastischen Kunststoffmaterial in Betracht.

Die Verstärkungsschicht 204 kann insbesondere als ein gewobener, gestrickter, gewirkter oder gewickelter Stützschlauch 208 aus einem der vorstehend genannten Materialien ausgebildet sein.

Die Verbindungsschicht 206 zwischen der Kunststoffschicht 202 und der Verstärkungsschicht 204, welche die Kunststoffschicht 202 und die Verstärkungsschicht 204 zu einem Verbundmaterial verbindet, kann aus einem thermoplastischen Kunststoffmaterial, insbesondere aus einem Fluorthermoplastmaterial, wie beispielsweise PFA (Perfluoralkoxy-Copolymer), FEP (Perfluorethylenpropylen-Copolymer), MFA (Tetrafluorethylen-Perfluormethylvinylether) oder modifiziertem PTFE gebildet sein.

Alternativ hierzu kann die Verbindungsschicht 206 auch aus einem kiassischen Klebesystem, das nachträglich aufgebracht wird, gebildet sein.

Das rohrförmige Formteil 158 ist an seinen beiden Enden mit jeweils einem (nicht dargestellten) Schnellkupplungsanschluss versehen.

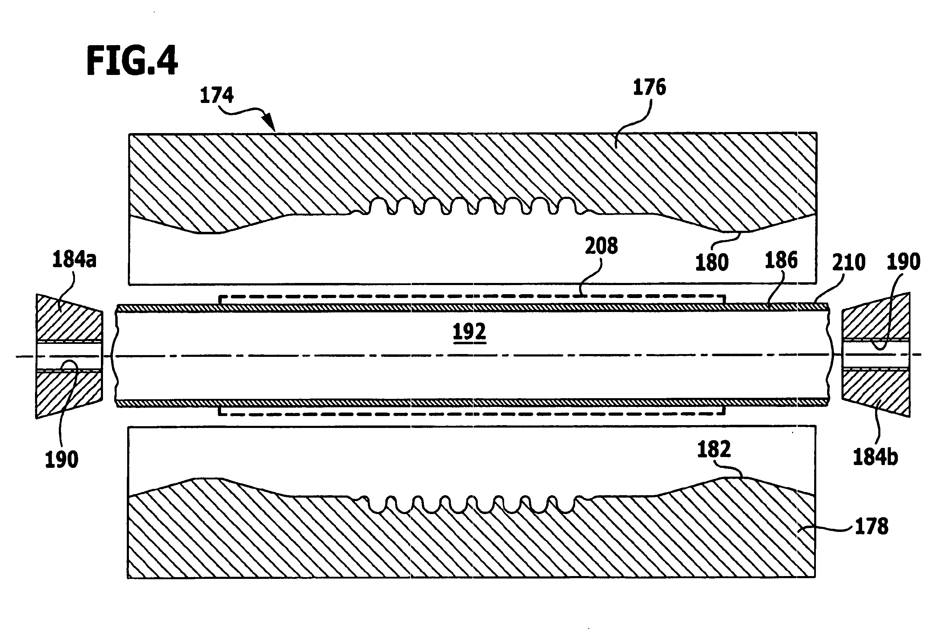

Das rohrförmige Formteil 158 wird vorzugsweise durch einen Blasformvorgang hergestellt, der im folgenden unter Bezugnahme auf die Fig. 4 bis 6 erläutert wird.

Für den Blasformvorgang wird eine mehrteilige Blasform 174 verwendet, die ein Oberteil 176 und ein Unterteil 178, deren einander zugewandte Innenseiten 180, 182 entsprechend der gewünschten Außenkontur des Formteils 158 ausgebildet sind, und zwei stirnseitige Anschlussstücke 184a, 184b umfasst.

Bei geöffneter Blasform 174 (siehe Fig. 4) wird ein Schlauch 186 aus dem PTFE, modifiziertes PTFE, PFA oder ein anderes teil- oder vollfluoriertes Thermoplastmaterial in reiner Form oder mit Füllstoffen enthaltenden Ausgangsmaterial für die Kunststoffschicht 202 zwischen das Oberteil 176 und das Unterteil 178 der Blasform 174 eingelegt.

Die Außenseite 210 des Schlauches 186 ist mit einem Schmelzkleber aus einem Fluorthermoplastmaterial, wie beispielsweise PFA, FEP, MFA oder modifiziertes PTFE, beschichtet.

Der Stützschlauch 208 aus dem die Verstärkungsschicht 204 bildenden Material ist über den Schlauch 186 aus dem Ausgangsmaterial für die Kunststoffschicht 202 gezogen worden.

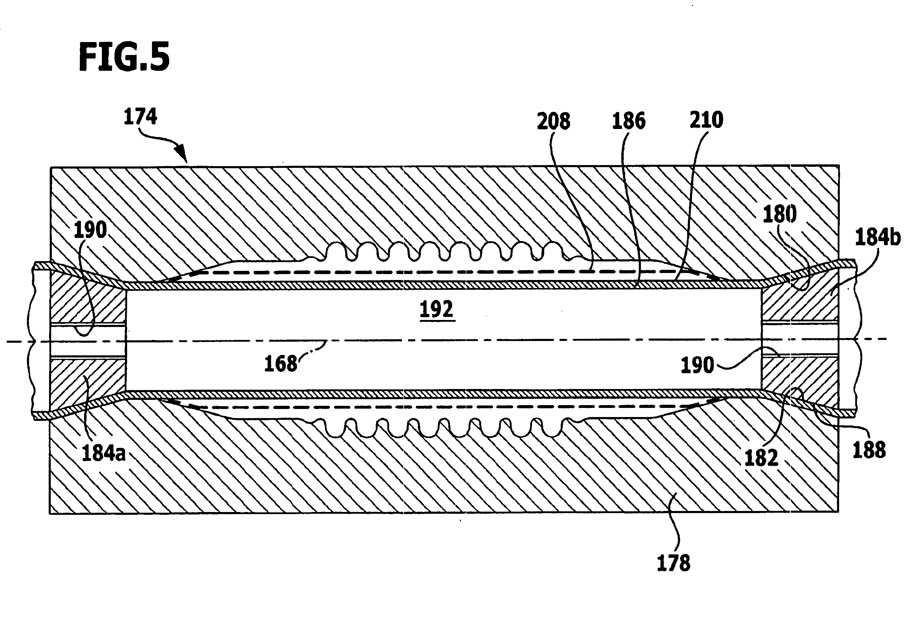

Anschließend wird die Blasform 174 geschlossen (siehe Fig. 5), wobei die beiden Enden des Schlauches 186 über jeweils ein Anschlussstück 184a, 184b gezogen und zwischen die Außenseite 188 jeweils eines Anschlussstücks 184a, 184b einerseits und die Innenseite 180 bzw. 182 des Oberteils 176 bzw. des Unterteils 178 der Blasform 174 andererseits eingespannt werden.

Anschließend wird die Blasform 174 mittels einer (nicht dargestellten) Heizvorrichtung auf eine Blastemperatur im Bereich von ungefähr 250°C bis ungefähr 400°C erwärmt.

Je höher die Blastemperatur gewählt wird, desto geringer ist bei dem ausgeformten Formteil 158 der Memory-Effekt, d.h. die Rückformneigung der Kunststoffschicht 202 des Formteils 158 bei Erwärmung.

Besonders günstig ist es, wenn die Blasumformung bei einer Temperatur oberhalb der Kristallitschmelztemperatur des Ausgangsmaterials des Schlauches 186 durchgeführt wird.

Im Falle von reinem PTFE als Ausgangsmaterial für die Kunststoffschicht 202 liegt die Kristallitschmelztemperatur bei ungefähr 327°C.

Nach Erreichen der gewünschten Blastemperatur wird Luft oder ein inertes Gas unter einem Blasdruck von beispielsweise ungefähr 6 bar bis ungefähr 50 bar durch Zutrittskanäle 190 in den Anschlussstücken 184a, 184b dem Innenraum 192 des Schlauches 186 zugeführt.

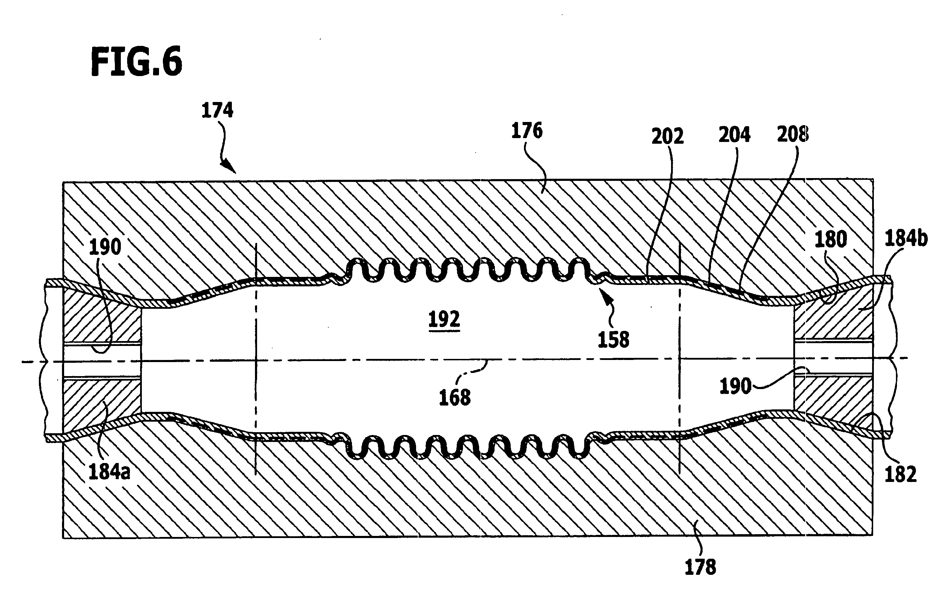

Durch diese Beaufschlagung seines Innenraums 192 mit dem erhöhten Blasdruck wird die Wandung des Schlauches 186 aufgebiasen und legt sich an die Innenseiten 180, 182 des Oberteils 176 bzw. des Unterteils 178 der Blasform 174 an (siehe Fig. 6), wobei der dazwischenliegende Stützschlauch 208 sowohl gegen das Oberteil 176 bzw. das Unterteil 178 der Blasform als auch gegen die Außenseite 210 des Schlauches 186 gepresst wird, so dass die gewünschte Kontur des Formteils 158 ausgebildet wird.

Bei der erhöhten Blastemperatur verbindet sich die Schmelzkleber-Beschichtung des Schlauches 186 sowohl mit dem Material der aus dem Schlauch 186 gebildeten Kunststoffschicht 202 als auch mit dem Material der aus dem Stützschlauch 208 gebildeten Verstärkungsschicht 204, so dass aus der Schmelzkleber-Beschichtung die Verbindungsschicht 206 gebildet wird, welche die Kunststoffschicht 202 und die Verstärkungsschicht 204 zu einem unlösbaren Verbund verbindet.

Der erhöhte Blasdruck im Innenraum 192 des Schlauches 186 bzw. des ausgeformten Formteils 158 wird während einer Blasdauer im Bereich von einigen Sekunden bis einigen Minuten aufrechterhalten.

Anschließend wird die Blasform 174 durch Abschalten der Heizvorrichtung und gegebenenfalls durch Zusatzkühlung bis auf eine Entformungstemperatur im Bereich von ungefähr 100°C bis ungefähr 250°C abgekühlt.

Nach Erreichen der gewünschten Entformungstemperatur wird die mehrteilige Blasform 174 geöffnet und das ausgeformte rohrförmige Formteil 158 entnommen.

Nach Ausbildung der Schnellkupplungsanschlüsse an den Enden des Formteils 158 kann das rohrförmige Formteil 158 als heißseitige Ladeluftleitung 132 in der Baugruppe 156 verwendet werden.

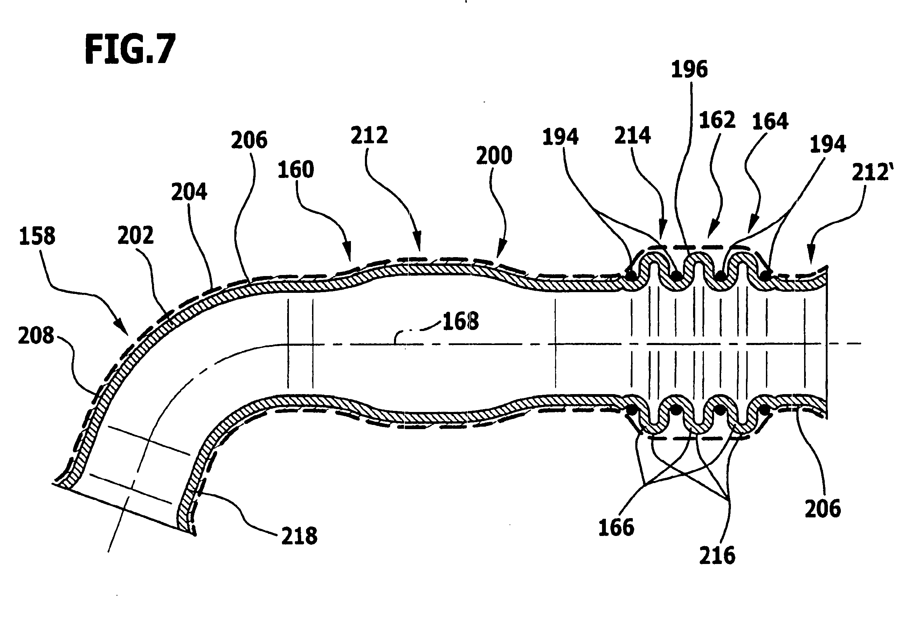

Eine in Fig. 7 dargestellte zweite Ausführungsform eines rohrförmigen Formteils 158 unterscheidet sich von der in den Fig. 2 und 3 dargestellten ersten Ausführungsform dadurch, dass die Verstärkungsschicht 204 nicht über die gesamte Länge des Formteils 158 hinweg in einem Festverbund mit der Kunststoffschicht 202 verbunden ist, sondern lediglich in zwei längs der Rohrlängsachse 168 voneinander beabstandeten Verbundabschnitten 212 und 212', wobei der erste Verbundabschnitt 212 die steife Zone 160 des Formteils 158 und der zweite Verbindungsabschnitt 212' einen Endabschnitt des Formteils 158 umfasst, welcher auf der der steifen Zone 160 abgewandten Seite des Faltenbalgs 164 angeordnet ist.

Zwischen den einander zugewandten Enden der beiden Verbundabschnitte 212, 212' erstreckt sich ein Nicht-Verbundabschnitt 214 des Formteils 158, in welchem die Verstärkungsschicht 204 und die Kunststoffschicht 202 nicht in einem Festverbund miteinander verbunden sind, sondern vielmehr die Verstärkungsschicht 204 die Kunststoffschicht 202 lose umschließt.

Wie aus Fig. 7 zu ersehen ist, liegt in dem Nicht-Verbundabschnitt 214 die Verstärkungsschicht 204 nur an den äußeren Kuppen 216 der Falten 166 des Faltenbalgs 164 an, erstreckt sich aber nicht in die zwischen den Kuppen 216 liegenden Täler hinein.

Bei dieser Ausführungsform liegt die Verstärkungsschicht 204 also nicht überall flächig an der Kunststoffschicht 202 an.

Ferner ist die Verstärkungsschicht 204 im Nicht-Verbundabschnitt 214 relativ zu der Kunststoffschicht 202 sowohl in axialer Richtung als auch in der Umfangsrichtung des Formteils 158 (in gewissem Umfang) beweglich.

Zur Erhöhung der Druckfestigkeit und der mechanischen Stabilität ist das Formteil 158 bei dieser Ausführungsform ferner mit mehreren, beispielsweise vier, Verstärkungsringen 194 versehen, die radial innerhalb der Verstärkungsschicht 204 angeordnet sind und von außen, insbesondere im Bereich zwischen jeweils zwei Falten 166, an der Außenseite 196 der Kunststoffschicht 202 anliegen.

Diese Verstärkungsringe 194 können aus einem metallischen Material, beispielsweise aus einem Stahlmaterial, oder aus einem thermisch und mechanisch hinreichend beständigen Kunststoffmaterial, beispielsweise PEEK oder PPS, gebildet sein.

Alternativ oder ergänzend hierzu kann auch vorgesehen sein, dass mindestens ein Verstärkungsring 194 als ein textiler Verstärkungsring ausgebildet ist, der aus einem Fasermaterial gebildet ist.

Dieses Fasermaterial kann organische, mineralische und/oder metallische Fasern umfassen.

Der mindestens eine Verstärkungsring 194 kann aus einem solchen Fasermaterial geflochten, gewebt und/oder gesponnen sein.

Die Verstärkungsringe 194 können einteilig oder mehrteilig ausgebildet sein.

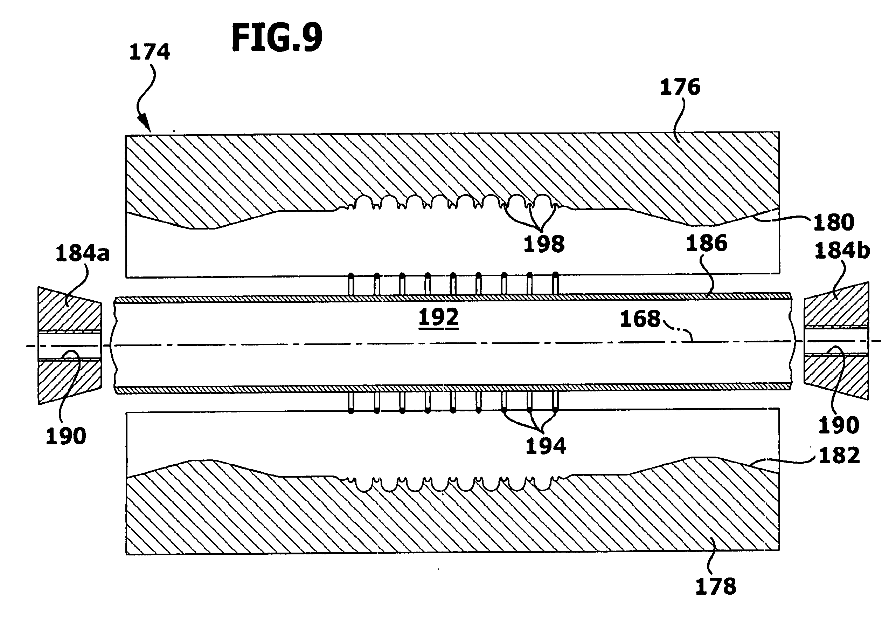

Einteilige Verstärkungsringe 194 können bereits bei der Ausformung der Kunststoffschicht 202 mit derselben verbunden werden, wie dies in den Fig. 9 bis 11 dargestellt ist.

Wie aus Fig. 9 zu ersehen ist, werden hierzu bei geöffneter mehrteiliger Blasform 174 die Verstärkungsringe 194 zusammen mit dem Schlauch 186 aus dem Ausgangsmaterial an der gewünschten axialen Position zwischen das Oberteil 176 und das Unterteil 178 der Blasform 174 eingelegt, wobei sich der Schlauch 186 aus dem Ausgangsmaterial durch die Verstärkungsringe 194 hindurch erstreckt.

Anders als bei dem in den Fig. 4 bis 6 dargestellten Blasformvorgang wird dabei jedoch kein Stützschlauch aus dem die Verstärkungsschicht 204 bildenden Material über den Schlauch 186 aus dem Ausgangsmaterial für die Kunststoffschicht 202 gezogen.

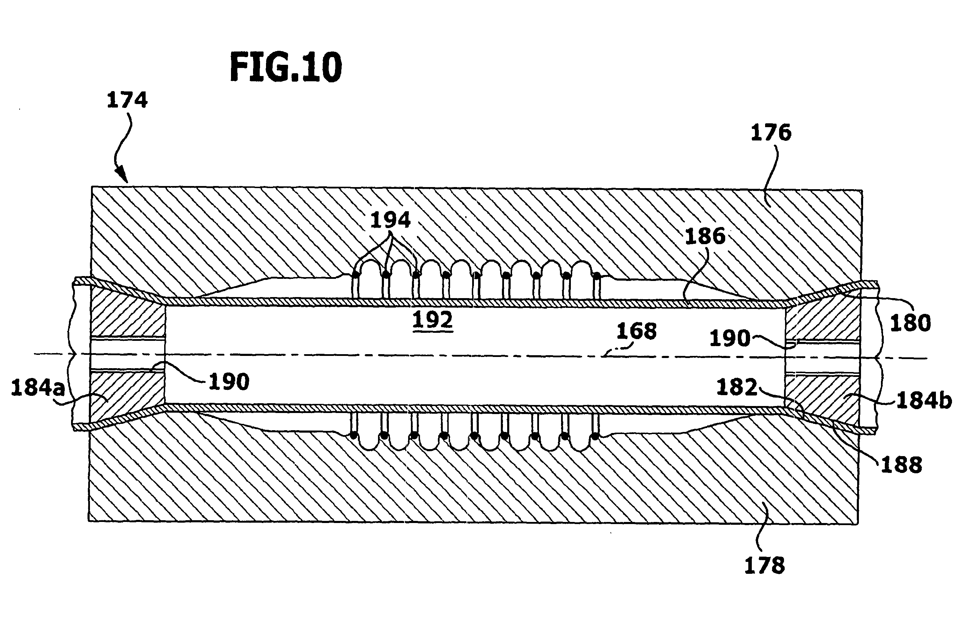

Anschließend wird die Blasform 174 geschlossen (siehe Fig. 10), wobei die Verstärkungsringe 194 in hierfür an den Innenseiten 180, 182 des Oberteils 176 bzw. des Unterteils 178 der Blasform 174 vorgesehenen Ringnuten 198 aufgenommen werden, so dass die Verstärkungsringe 194 während des Blasformvorgangs ihre gewünschte Ausrichtung relativ zu der Rohrlängsachse 168 beibehalten und nicht verkippen.

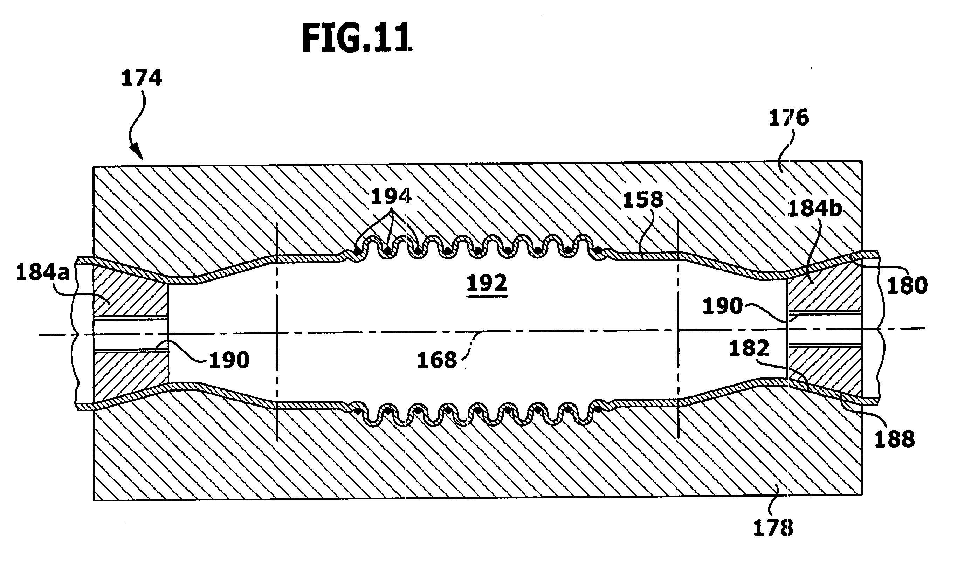

Nach Schließen der Blasform 174 und Aufheizen derselben auf die Blastemperatur wird der Blasformvorgang, wie bei der in den Fig. 4 bis 6 dargestellten ersten Ausführungsform, durch Beaufschlagen des Innenraums 192 des Schlauches 186 mit unter dem Blasdruck stehender Luft oder inertem Gas durchgeführt, wodurch der Schlauch 186 aus dem Ausgangsmaterial in einen Formteil-Rohling 218 mit der gewünschten Kontur der Kunststoffschicht 202 umgeformt wird (siehe Fig. 11).

Die Verstärkungsringe 194 sind nun formschlüssig mit dem Formteil-Rohling 218 verbunden, so dass der Formteil-Rohling 218 mit den Verstärkungsringen 194 als eine Einheit gehandhabt und montiert werden kann.

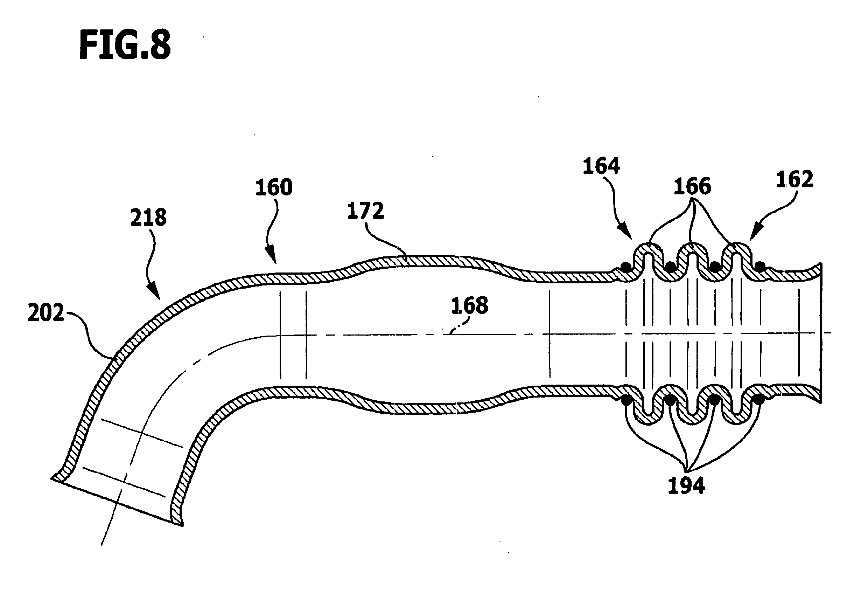

Nach Abkühlen der Blasform 174 auf die Entformungstemperatur wird die Blasform 174 geöffnet und der Formteil-Rohling 218 mit den daran angeordneten Verstärkungsringen 194 entnommen (siehe Fig. 8).

In einem zweiten Arbeitgang wird ein Stützschlauch 208 aus dem die Verstärkungsschicht 204 bildenden Material über den in Fig. 8 dargestellten Formteil-Rohling 218 mit den daran bereits angeordneten Verstärkungsringen 194 gezogen und in den Verbundabschnitten 212 und 212' unter Ausbildung einer Verbindungsschicht 206 mit dem Formteil-Rohling 218 fest verschweißt, so dass in den Verbundabschnitten 212 und 212' ein Festverbund aus der Verstärkungsschicht 204 (gebildet aus dem Material des Stützschlauches 208) und der Kunststoffschicht 202 (gebildet aus dem Material des Formteil-Rohlings 218) erzeugt wird, in dem die Verstärkungsschicht 204 und die Kunststoffschicht 202 durch die dazwischen angeordnete Verbindungsschicht 206 fest miteinander verbunden sind.

Im zwischen den Verbundabschnitten 212 und 212' liegenden Nicht-Verbundabschnitt 214 erfolgt jedoch keine Festlegung des Stützschlauches 208 an dem Formteil-Rohling 218, so dass in diesem Abschnitt die aus dem Stützschlauch 208 gebildete Verstärkungsschicht 204 nur lose über den Falten 166 des Faltenbalgs 164 aufliegt.

Das Verschweißen des Stützschlauches 208 mit dem Formteil-Rohling 218 in den Verbundabschnitten 212, 212' kann insbesondere durch Schweißen mittels eines thermoplastischen Schmelzklebers erfolgen.

Als solcher thermoplastischer Schmelzkleber kann insbesondere ein thermoplastischer Fluorkunststoff verwendet werden, beispielsweise PFA (Perfluoralkoxy-Copolymer), FEP (Perfluorethylenpropylen-Copolymer), MFA (Tetrafluorethylen-Perfluormethylvinylether) oder thermoplastisch verarbeitbares PTFE.

Für das Einbringen des Schmelzklebers zwischen den Stützschlauch 208 und den Formteil-Rohling 218 gibt es insbesondere die folgenden Möglichkeiten:
a) Das Material des Stützschlauchs 208, insbesondere ein Glasfasergewebe, kann mit einer Emulsion oder einer Dispersion, welche einen thermoplastischen Fluorkunststoff enthält, getränkt und anschließend getrocknet werden.
b) Zwischen den Stützschlauch 208 und den Formteil-Rohling 218 kann eine Folie aus dem thermoplastischen Fluorkunststoff eingelegt werden.
c) Zwischen den Stützschlauch 208 und den Formteil-Rohling 218 kann ein (beispielsweise gedrehtes) Formteil aus dem thermoplastischen Fluorkunststoff eingelegt werden.
d) In das Material des Stützschlauchs 208 können Fasern aus thermoplastischem Fluorkunststoffmaterial eingebracht, beispielsweise eingewebt, werden.
e) Der thermoplastische Fluorkunststoff kann angespritzt werden, wobei unter Druck stehendes flüssiges Fluorkunststoffmaterial zwischen und durch die Lagen des Stützschlauches 208 gepresst wird.

Ferner kann der thermoplastische Schmelzkleber auch durch eine Kombination von mehreren der vorstehend beschriebenen Verfahren a) bis e) in den Zwischenraum zwischen dem Stützschlauch 208 und dem Formteil-Rohling 218 eingebracht werden.

Anschließend wird die Temperatur des thermoplastischen Schmelzklebers auf eine oberhalb der Schmelztemperatur des Schmelzklebers liegende Schweißtemperatur erhöht, so dass sich der Schmelzkleber sowohl mit dem Material der aus dem Formteil-Rohling 218 gebildeten Kunststoffschicht 202 als auch mit dem Material der aus dem Stützschlauch 208 gebildeten Verstärkungsschicht 204 verbindet, so dass aus dem Schmelzkleber die Verbindungsschicht 206 gebildet wird, welche die Kunststoffschicht 202 und die Verstärkungsschicht 204 zu einem unlösbaren Verbund verbindet.

Vorzugsweise liegt die Schweißtemperatur oberhalb der Geltemperatur des Materials des Formteil-Rohlings 218, also beispielsweise oberhalb von 327°C (Geltemperatur von Polytetrafluorethylen).

Besonders günstig ist es, wenn überschüssiger Schmelzkleber durch den Stützschlauch 208 hindurchdringt und an der Außenseite des Stützschlauches 208 eine glatte Schutzschicht bildet. Durch eine solche äußere Schutzschicht sind die Fasern des Stützschlauchmaterials gegen Beschädigungen von der Außenseite des Formteils 158 her geschützt.

Um eine solche Schutzwirkung zu erzielen, kann der Stützschlauch 208, insbesondere im Nicht-Verbundabschnitt 214, gummiert werden, was auch einen Schutz gegen ein Aufspleißen der Fasern des Stützschlauchmaterials bietet.

Alternativ oder ergänzend zu dem vorstehend beschriebenen Verschweißen des Stützschlauchs 208 und des Formteil-Rohlings 218 mittels eines thermoplastischen Schmelzklebers kann auch vorgesehen sein, dass der Stützschlauch 208 mittels eines temperaturbeständigen Elastomers, vorzugsweise eines Fluorelastomers, an den Formteil-Rohling 218 anvulkanisiert wird.

Hierzu wird vor dem Anvulkanisieren die (beispielsweise PTFE-haltige) Oberfläche des Formteil-Rohlings 218 durch Nassätzen chemisch aktiviert und optional mit einem Primer versehen, um die Haftung der anschließend zu erzeugenden Elastomerschicht zu verbessern.

Nach der chemischen Aktivierung der Oberfläche des Formteil-Rohlings 218 wird eine Elastomerschicht zwischen den Stützschlauch 218 und den Formteil-Rohling 218 eingebracht, beispielsweise durch ein Spritzverfahren oder durch ein Laminierverfahren (ähnlich den vorstehend beschriebenen Verfahren a) bis c) zum Einbringen des thermoplastischen Schmelzklebers beim Schweißverfahren).

Alternativ oder ergänzend zum Anschweißen oder Anvulkanisieren des Stützschlauchs 208 an den Formteil-Rohling 218 kann auch vorgesehen sein, dass der Stützschlauch 208 mittels eines temperaturbeständigen Klebers mit dem Formteil-Rohling 218 verklebt wird. Vor einer solchen Verklebung wird die Oberfläche des Formteil-Rohlings 218 geätzt und erforderlichenfalls mit einem Primer versehen.

Alternativ oder ergänzend zu den vorstehend beschriebenen Verfahren kann der Stützschlauch 208 auch durch Form- und oder Kraftschluss mit dem Formteil-Rohling 218 fest verbunden werden, beispielsweise durch mechanisches Klemmen mittels bekannter Klemmvorrichtungen.

Statt erst einen Formteil-Rohling 218 durch Blasformen herzustellen und anschließend mit dem Stützschlauch 208 zu verbinden, kann auch vorgesehen sein, dass die Kunststoffschicht 202 des Formteils 158 durch Formteilspritzen aus einem einen Fluorkunststoff enthaltenden Ausgangsmaterial hergestellt wird, wobei der Stützschlauch 208 im selben Arbeitsgang in das Kunststoffmaterial eingebettet wird.

Ferner kann vorgesehen sein, dass nur die flexible Zone 162 des Formteils 158 mit dem Faltenbalg 164 durch Blasformen hergestellt wird und an diesen Formteil-Rohling beidseits den Verbundabschnitten 212, 212' entsprechende Glattrohrbereiche durch thermoplastisches Anspritzen anderer Fluorkunststoffe, beispielsweise von thermoplastisch verarbeitbarem PTFE, angefügt werden, wobei zugleich mit dem thermoplastischen Anspritzen im selben Arbeitsgang die Verstärkungsschicht 204 aus dem Stützschlauch 208 in die Kunststoffschicht 202 eingebettet wird.

Das auf eine der vorstehend beschriebenen Weisen hergestellte, in Fig. 7 dargestellte rohrförmige Formteil 158 bietet den Vorteil, dass die Kunststoffschicht 202 in den Verbundabschnitten 212 und 212' (Glattrohrbereiche) sowohl in radialer Richtung als auch in axialer Richtung durch den Festverbund mit der Verstärkungsschicht 204 abgestützt ist.

Im Nicht-Verbundabschnitt 214 (Faltenbereich) ist die Kunststoffschicht 202 in radialer Richtung durch die Verstärkungsringe 194 und in axialer Richtung durch die Verstärkungsschicht 204 abgestützt, welche in den unmittelbar an den Nicht-Verbundabschnitt 214 angrenzenden Verbundabschnitten 212, 212' einen Festverbund mit der Kunststoffschicht 202 bildet und den Nicht-Verbundabschnitt 214 einstückig überspannt, so dass auf die Kunststoffschicht 202 im Nicht-Verbundabschnitt 214 einwirkende axiale Kräfte von der Verstärkungsschicht 204 aufgenommen werden können.

Außerdem wird durch den Festverbund der Verstärkungsschicht 204 und der Kunststoffschicht 202 in den Verbundabschnitten 212 und 212', welche Endbereiche des rohrförmigen Formteils 158 bilden, eine Verbesserung der Klemmwirkung von Klemmanschlüssen, welche an den Enden des Formteils 158 angreifen, erzielt.

Im übrigen stimmt die in den Fig. 7 bis 11 dargestellte zweite Ausführungsform eines rohrförmigen Formteils 158 hinsichtlich Aufbau, Funktion und Herstellungsweise mit der in den Fig. 1 bis 6 dargestellten ersten Ausführungsform überein, auf deren vorstehende Beschreibung insoweit Bezug genommen wird.

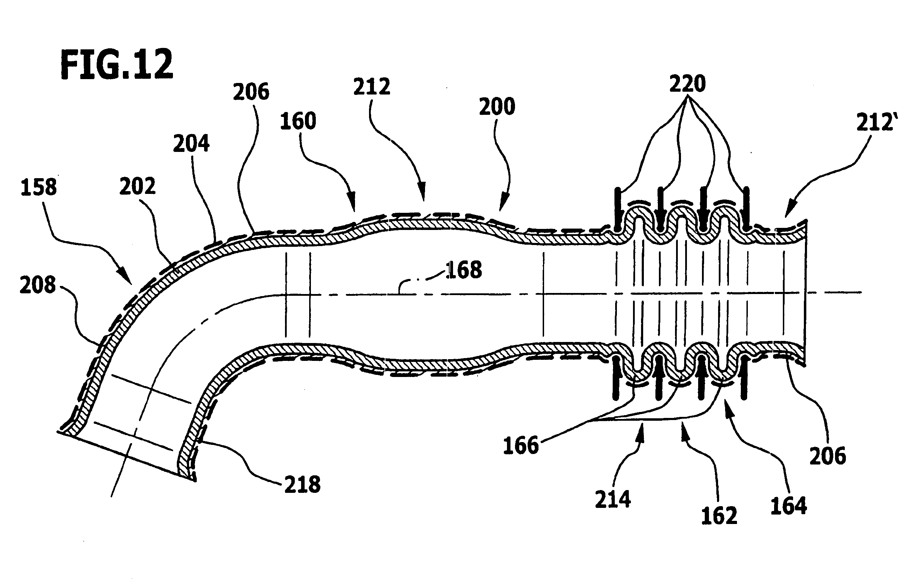

Eine in den Fig. 12 bis 14 dargestellte dritte Ausführungsform eines rohrförmigen Formteils 158 unterscheidet sich von der in Fig. 7 dargestellten zweiten Ausführungsform dadurch, dass im Bereich des Faltenbalgs 164 statt der inneren Verstärkungsringe 194, welche zwischen der Kunststoffschicht 202 und der Verstärkungsschicht 204 angeordnet sind, äußere Verstärkungsringe 220 vorgesehen sind, welche radial außerhalb der Verstärkungsschicht 204 angeordnet sind und die Verstärkungsschicht 204 ringförmig umschließen.

Solche äußeren Verstärkungsringe 220 können nicht bereits beim Blasformvorgang an dem Formteil-Rohling 218 angeordnet werden, sondern müssen mehrteilig ausgebildet sein, um nach dem Überziehen des Stützschlauches 208 auf den Formteil-Rohling 218 an der Außenseite des Stützschlauches 208 angeordnet werden zu können.

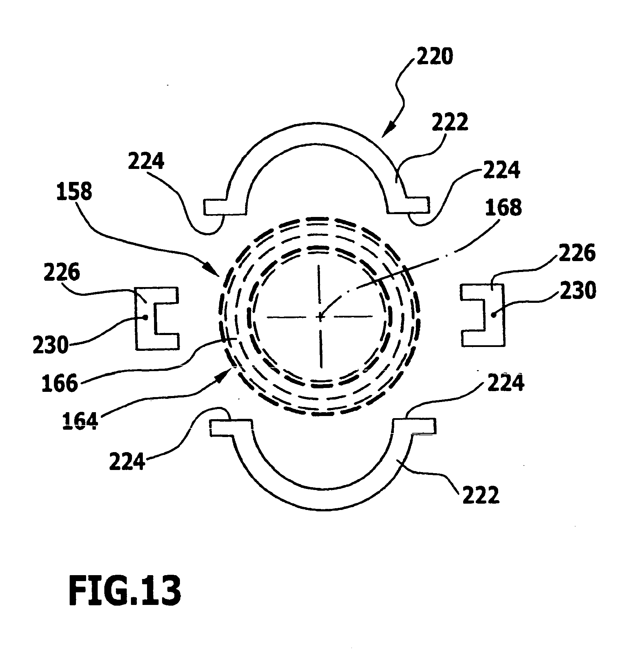

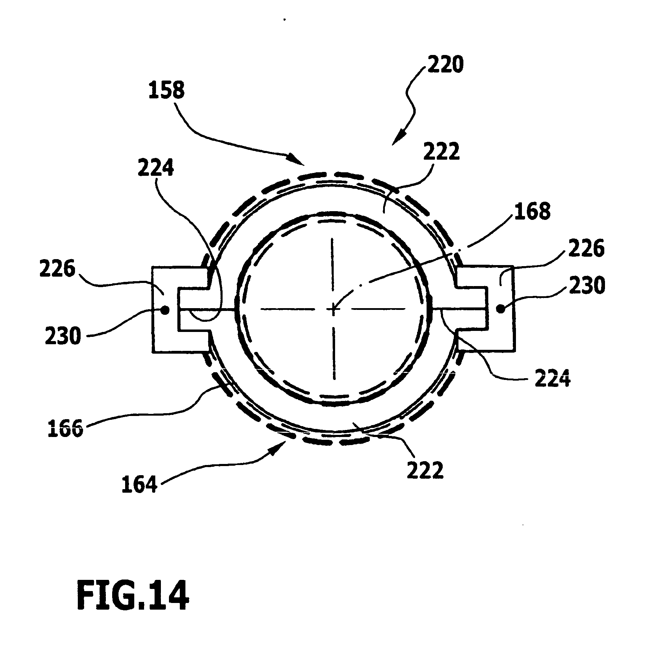

Wie aus den Fig. 13 und 14 zu ersehen ist, umfasst ein solcher mehrteiliger äußerer Verstärkungsring 220 zwei halbkreisbogenförmige Ringteile 222, welche im zusammengesetzten Zustand des Verstärkungsrings 220 (siehe Fig. 14) mit Kontaktflächen 224 aneinander anliegen, sowie zwei im wesentlichen U-förmige Klemmteile 226, welche im zusammengesetzten Zustand des Verstärkungsrings 220 die Kontaktbereiche der Ringteile 222 mit den Kontaktflächen 224 gegeneinander verspannen.

Um ein unerwünschtes Lösen der Klemmteile 226 von den Ringteilen 222 zu verhindern, sind die Ringteile 222 und die Klemmteile 226 mit (nicht dargestellten) miteinander zusammenwirkenden Rastelementen versehen, welche die Klemmteile 226 im zusammengesetzten Zustand des Verstärkungsrings 220 gegen eine Verschiebung in radialer Richtung relativ zu den Ringteilen 222 sichern.

Wie aus Fig. 12 zu ersehen ist, werden die äußeren Verstärkungsringe 220, ebenso wie die inneren Verstärkungsringe 194 der zweiten Ausführungsform, insbesondere im Bereich zwischen jeweils zwei Falten 166 des Faltenbalgs 164 an der Außenseite der Verstärkungsschicht 204 angeordnet.

Durch das Anordnen der äußeren Verstärkungsringe 220 an der Außenseite der Verstärkungsschicht 204 wird die Verstärkungsschicht 204 bei dieser Ausführungsform im Nicht-Verbundabschnitt 214 so verformt, dass sie sich auch in die Täler zwischen den Falten 166 des Faltenbalgs 164 hinein erstreckt; wie bei der in Fig. 7 dargestellten zweiten Ausführungsform des Formteils 158 ist die Verstärkungsschicht 204 aber auch bei dieser Ausführungsform im Nicht-Verbundabschnitt 214 nicht in einem Festverbund mit der Kunststoffschicht 202 verbunden.

Die äußeren Verstärkungsringe 220 der dritten Ausführungsform können grundsätzlich aus denselben Materialen hergestellt sein wie die Verstärkungsringe 194 der zweiten Ausführungsform.

Im übrigen stimmt die in Fig. 12 dargestellte dritte Ausführungsform eines rohrförmigen Formteils 158 hinsichtlich Aufbau, Funktion und Herstellungsweise mit der in den Fig. 7 bis 11 dargestellten zweiten Ausführungsform überein, auf deren vorstehende Beschreibung insoweit Bezug genommen wird.

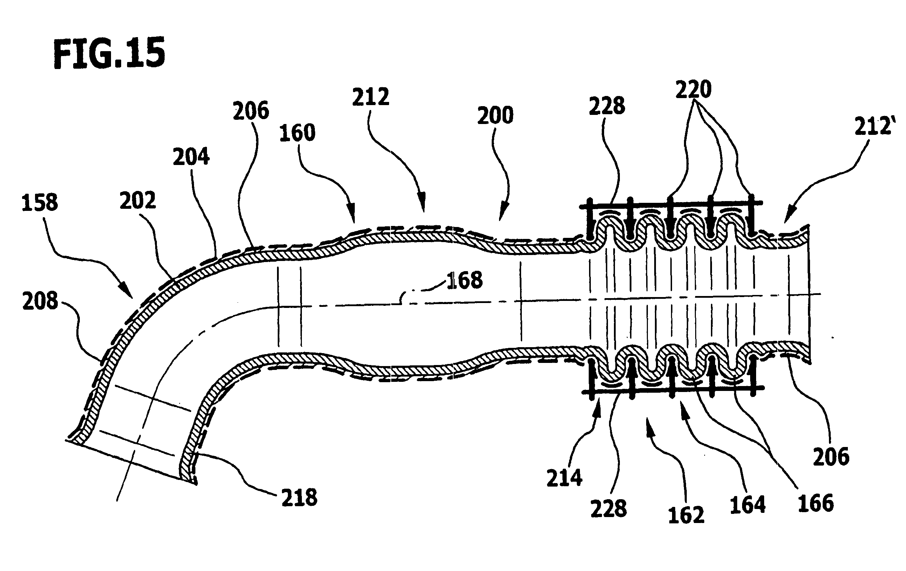

Eine in Fig. 15 dargestellte vierte Ausführungsform eines rohrförmigen Formteils 158 unterscheidet sich von der in Fig. 14 dargestellten dritten Ausführungsform dadurch, dass die in der Richtung der Rohrlängsachse 168 voneinander beabstandeten äußeren Verstärkungsringe 220 untereinander mittels Verbindungselementen 228, beispielsweise Seilen oder Drähten, untereinander verbunden sind.

Solche Verbindungselemente 228 erhöhen die mechanische Stabilität des Formteils 158 in der flexiblen Zone 162.

Mittels solcher Verbindungselemente 228 können die äußeren Verstärkungsringe 220 nicht nur untereinander, sondern auch mit einer externen Anbindung des rohrförmigen Formteils 158, welche an den Endbereichen des Formteils 158 angreifen, verbunden sein.

Die Verbindungselemente 228 können sich insbesondere durch Durchtrittsöffnungen 230 an den Klemmteilen 226 der äußeren Verstärkungsringe (siehe die Fig. 13 und 14) hindurch erstrecken und mit diesen Klemmteilen 226 verschweißt und/oder verklemmt sein.

Im übrigen stimmt die in Fig. 15 dargestellte vierte Ausführungsform eines rohrförmigen Formteils 158 hinsichtlich Aufbau, Funktion und Herstellungsweise mit der in Fig. 14 dargestellten dritten Ausführungsform überein, auf deren vorstehende Beschreibung insoweit Bezug genommen wird.

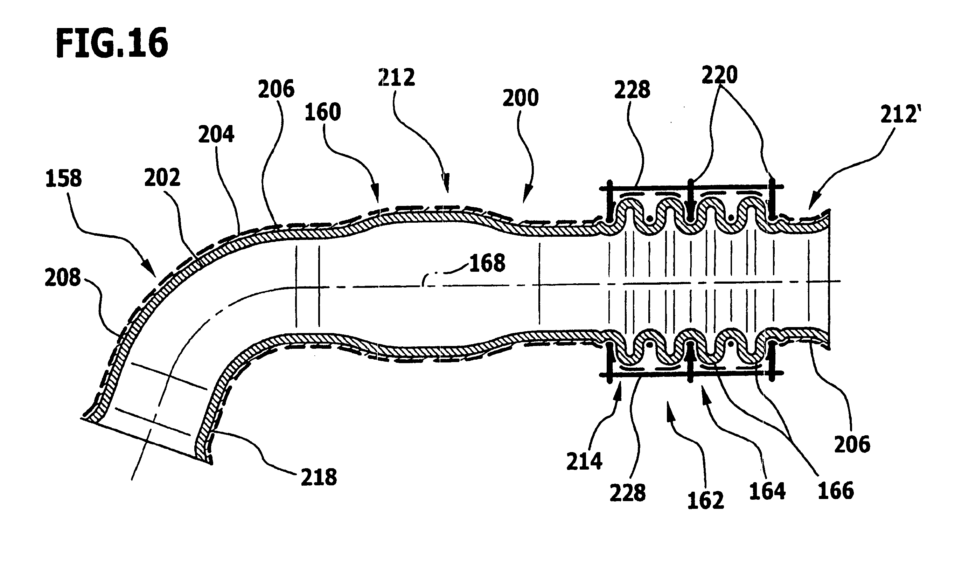

Eine in Fig. 16 dargestellte fünfte Ausführungsform eines rohrförmigen Formteils 158 unterscheidet sich von der in Fig. 15 dargestellten vierten Ausführungsform dadurch, dass jeder zweite äußere Verstärkungsring 220 durch einen inneren Verstärkungsring 194 ersetzt ist, so dass im Bereich des Faltenbalgs 164 längs der Rohrlängsachse 168 jeweils äußere Verstärkungsringe 220, die außerhalb der Verstärkungsschicht 204 angeordnet sind, und innere Verstärkungsringe 194, die zwischen der Verstärkungsschicht 204 und der Kunststoffschicht 202 angeordnet sind, abwechselnd aufeinanderfolgen.

Die äußeren Verstärkungsringe 220 sind durch Verbindungselemente 228 in axialer Richtung miteinander verbunden.

Die inneren Verstärkungsringe 194 werden bereits bei der Herstellung des Formteil-Rohlings 218 durch einen Blasformvorgang am Formteil-Rohling 218 angeordnet, wie dies vorstehend im Zusammenhang mit der zweiten Ausführungsform des Formteils 158 beschrieben worden ist.

Im übrigen stimmt die in Fig. 16 dargestellte fünfte Ausführungsform eines rohrförmigen Formteils 158 hinsichtlich Aufbau, Funktion und Herstellungsweise mit der in Fig. 15 dargestellten vierten Ausführungsform überein, auf deren vorstehende Beschreibung insoweit Bezug genommen wird.

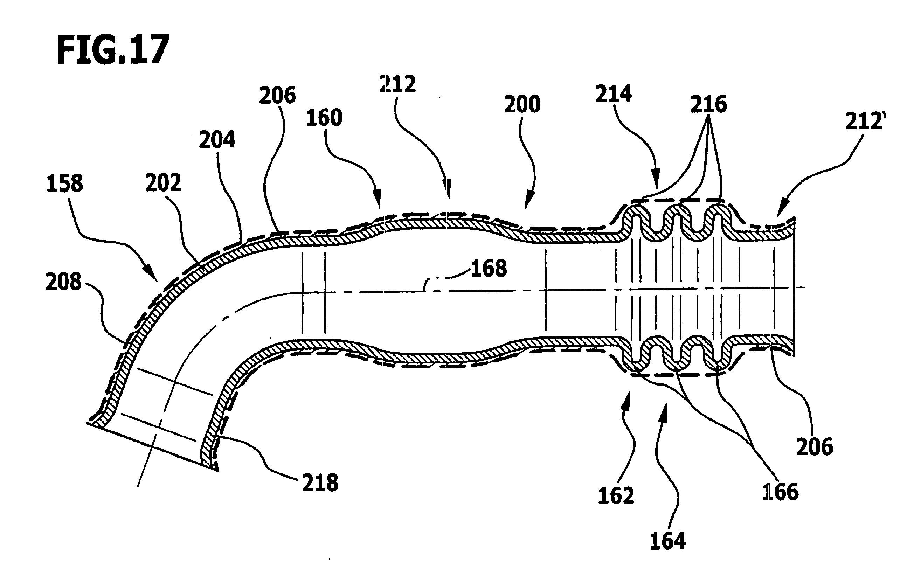

Eine in Fig. 17 dargestellte sechste Ausführungsform eines rohrförmigen Formteils 158 unterscheidet sich von der in Fig. 7 dargestellten zweiten Ausführungsform dadurch, dass in der flexiblen Zone 162 des Formteils 158 weder innere Verstärkungsringe 194 noch äußere Verstärkungsringe 220 vorgesehen sind.

In diesem Fall werden bei der Herstellung des Formteil-Rohlings 218 keine Verstärkungsringe 194 in die Blasform 174 eingelegt.

Im übrigen stimmt die in Fig. 17 dargestellte sechste Ausführungsform eines rohrförmigen Formteils 158 hinsichtlich Aufbau, Funktion und Herstellungsweise mit der in den Fig. 7 bis 11 dargestellten zweiten Ausführungsform überein, auf deren vorstehende Beschreibung insoweit Bezug genommen wird.

## Patentansprüche

1. Rohrförmiges Formteil mit einer Wandung (200),
wobei die Wandung (200) einen Verbund umfasst, der eine Kunststoffschicht (202), die aus einem ein Fluorpolymermaterial enthaltenden Material gebildet ist, und eine Verstärkungsschicht (204) umfasst, und wobei das Formteil (158) mindestens einen Verbundabschnitt (212, 212'), in welchem die Verstärkungsschicht (204) und die Kunststoffschicht (202) in einem Festverbund miteinander verbunden sind, und mindestens einen Nicht-Verbundabschnitt (214), in welchem die Verstärkungsschicht (204) und die Kunststoffschicht (202) nicht in einem Festverbund miteinander verbunden sind, aufweist,
**dadurch gekennzeichnet,**
**dass** die Kunststoffschicht (202) aus einem rohrförmigen Formteil-Rohling (218) und die Verstärkungsschicht (204) aus einem Stützschlauch (208) gebildet ist.

2. Formteil nach Anspruch 1, **dadurch gekennzeichnet, dass** die Verstärkungsschicht (204) die Kunststoffschicht (202) zumindest teilweise umgibt.

3. Formteil nach einem der Ansprüche 1 oder 2, **dadurch gekennzeichnet, dass** die Kunststoffschicht (202) selbsttragend ausgebildet ist.

4. Formteil nach einem der Ansprüche 1 bis 3, **dadurch gekennzeichnet, dass** die Verstärkungsschicht (204) selbsttragend ausgebildet ist.

5. Formteil nach einem der Ansprüche 1 bis 4, **dadurch gekennzeichnet, dass** die Verstärkungsschicht (204) ein Gewebe, Gewirke, Gestrick, Gewirr oder Geflecht oder eine Wicklung umfasst.

6. Formteil nach einem der Ansprüche 1 bis 5, **dadurch gekennzeichnet, dass** die Verstärkungsschicht (204) ein Glasfasermaterial, ein Kohlefasermaterial, ein Aramidfasermaterial und/oder ein Fasermaterial aus einem thermoplastischen Kunststoffmaterial enthält.

7. Formteil nach einem der Ansprüche 1 bis 6, **dadurch gekennzeichnet, dass** zwischen der Kunststoffschicht (202) und der Verstärkungsschicht (204) eine Verbindungsschicht (206) angeordnet ist.

8. Formteil nach Anspruch 7, **dadurch gekennzeichnet, dass** die Verbindungsschicht (206) ein thermoplastisches Kunststoffmaterial enthält.

9. Formteil nach einem der Ansprüche 7 oder 8, **dadurch gekennzeichnet, dass** die Verbindungsschicht (206) ein Fluorthermoplastmaterial, insbesondere PFA, FEP, MFA oder modifiziertes PTFE, enthält.

10. Formteil nach einem der Ansprüche 1 bis 9, **dadurch gekennzeichnet, dass** das Formteil (158) mindestens eine flexible Zone (162) aufweist.

11. Formteil nach Anspruch 10, **dadurch gekennzeichnet, dass** die flexible Zone (162) einen Faltenbalg (164) umfasst.

12. Formteil nach einem der Ansprüche 1 bis 11, **dadurch gekennzeichnet, dass** das Formteil (158) mindestens eine steife Zone (160) umfasst.

13. Formteil nach Anspruch 12, **dadurch gekennzeichnet, dass** die steife Zone (160) mindestens einen gekrümmten Abschnitt (170) aufweist.

14. Formteil nach einem der Ansprüche 1 bis 13, **dadurch gekennzeichnet, dass** das Formteil (158) blasgeformt ist.

15. Formteil nach einem der Ansprüche 1 bis 14, **dadurch gekennzeichnet, dass** das Formteil (158) bei einer Temperatur oberhalb der Kristallitschmelztemperatur des Ausgangsmaterials der Kunststoffschicht (202) geformt ist.

16. Formteil nach einem der Ansprüche 1 bis 15, **dadurch gekennzeichnet, dass** die Kunststoffschicht (202) aus einem PTFE-Compound und/oder aus einem modifizierten Polytetrafluorethylen-Compound gebildet ist.

17. Formteil nach Anspruch 16, **dadurch gekennzeichnet, dass** das PTFE-Compound oder das modifizierte Polytetrafluorethylen-Compound ein Schwarzpigment, vorzugsweise Ruß, enthält.

18. Formteil nach einem der Ansprüche 1 bis 17, **dadurch gekennzeichnet, dass** das Formteil (158) bei einer Betriebstemperatur von mindestens 200°C, vorzugsweise von mindestens 250°C, thermisch stabil ist.

19. Formteil nach einem der Ansprüche 1 bis 18, **dadurch gekennzeichnet, dass** das Formteil (158) bei einem Betriebsinnendruck von mindestens 2 bar, vorzugsweise von mindestens 2,5 bar, mechanisch stabil ist.

20. Formteil nach einem der Ansprüche 1 bis 19, **dadurch gekennzeichnet, dass** in mindestens einem Nicht-Verbundabschnitt (214) die Verstärkungsschicht (204) die Kunststoffschicht (202) lose umschließt.

21. Formteil nach einem der Ansprüche 1 bis 20, **dadurch gekennzeichnet, dass** das Formteil (158) mindestens zwei Verbundabschnitte (212, 212') aufweist, zwischen denen ein Nicht-Verbundabschnitt (214) angeordnet ist.

22. Formteil nach Anspruch 21, **dadurch gekennzeichnet, dass** die Verstärkungsschicht (204) eines ersten Verbundabschnitts (212) und die Verstärkungsschicht (204) eines zweiten Verbundabschnitts (212') einstückig miteinander ausgebildet sind.

23. Formteil nach einem der Ansprüche 1 bis 22, **dadurch gekennzeichnet, dass** mindestens ein Verbundabschnitt (212, 212') an einem Endbereich des Formteils (158) angeordnet ist.

24. Formteil nach einem der Ansprüche 1 bis 23, **dadurch gekennzeichnet, dass** das Formteil (158) mindestens eine flexible Zone (162) aufweist und mindestens ein Nicht-Verbundabschnitt (214) in der flexiblen Zone (162) angeordnet ist.

25. Formteil nach einem der Ansprüche 1 bis 24, **dadurch gekennzeichnet, dass** das Formteil (158) mindestens eine steife Zone (160) aufweist und mindestens ein Verbundabschnitt (212) in der steifen Zone (160) angeordnet ist.

26. Formteil nach einem der Ansprüche 1 bis 25, **dadurch gekennzeichnet, dass** in mindestens einem Verbundabschnitt (212, 212') die Verstärkungsschicht (204) stoffschlüssig relativ zu der Kunststoffschicht (202) festgelegt ist.

27. Formteil nach einem der Ansprüche 1 bis 26, **dadurch gekennzeichnet, dass** in mindestens einem Verbundabschnitt (212, 212') die Verstärkungsschicht (204) mittels eines thermoplastischen Schmelzklebers mit der Kunststoffschicht (202) verschweißt ist.

28. Formteil nach einem der Ansprüche 1 bis 27, **dadurch gekennzeichnet, dass** in mindestens einem Verbundabschnitt (212, 212') die Verstärkungsschicht (204) an die Kunststoffschicht (202) anvulkanisiert ist.

29. Formteil nach einem der Ansprüche 1 bis 28, **dadurch gekennzeichnet, dass** in mindestens einem Verbundabschnitt (212, 212') die Verstärkungsschicht (204) mittels eines Klebers mit der Kunststoffschicht (202) verklebt ist.

30. Formteil nach einem der Ansprüche 1 bis 29, **dadurch gekennzeichnet, dass** mindestens ein Verbundabschnitt (212, 212') durch Formteilspritzen gebildet ist.

31. Formteil nach einem der Ansprüche 1 bis 30, **dadurch gekennzeichnet, dass** das Formteil (158) mit mindestens einem Verstärkungsring (194; 220) versehen ist.

32. Formteil nach einem der Ansprüche 1 bis 31, **dadurch gekennzeichnet, dass** mindestens ein Verstärkungsring (194; 220) in einem Nicht-Verbundabschnitt (214) des Formteils (158) angeordnet ist.

33. Formteil nach einem der Ansprüche 31 oder 32, **dadurch gekennzeichnet, dass** mindestens ein Verstärkungsring (194) zwischen der Kunststoffschicht (202) und der Verstärkungsschicht (204) angeordnet ist.

34. Formteil nach einem der Ansprüche 31 bis 33, **dadurch gekennzeichnet, dass** mindestens ein Verstärkungsring (220) die Verstärkungsschicht (204) umschließt.

35. Formteil nach einem der Ansprüche 31 bis 34, **dadurch gekennzeichnet, dass** das Formteil (158) mit mehreren Verstärkungsringen (194; 220) versehen ist, welche in der Längsrichtung (168) des Formteils (158) voneinander beabstandet sind.

36. Formteil nach Anspruch 35, **dadurch gekennzeichnet, dass** mindestens zwei Verstärkungsringe (220) miteinander verbunden sind.

37. Formteil nach einem der Ansprüche 31 bis 36, **dadurch gekennzeichnet, dass** mindestens ein Verstärkungsring (220) mehrteilig ausgebildet ist.

38. Formteil nach einem der Ansprüche 1 bis 37, **dadurch gekennzeichnet, dass** in mindestens einem Nicht-Verbundabschnitt (214) die Verstärkungsschicht (204) ein Stützmaterial in Form eines Gewebes, Gewirkes, Gestricks, Gewirrs, Geflechts oder einer Wicklung umfasst und das Stützmaterial mit einer Gummierung versehen ist.

39. Baugruppe, umfassend einen Abgasturbolader (110) und einen Ladeluftkühler (136) für einen Verbrennungsmotor (100) und eine den Abgasturbolader (100) mit einem Ladelufteinlass (134) des Ladeluftkühlers (136) verbindende heißseitige Ladeluftleitung (132), **dadurch gekennzeichnet, dass** die heißseitige Ladeluftleitung (132) ein rohrförmiges Formteil (158) nach einem der Ansprüche 1 bis 38 umfasst.

40. Verfahren zum Herstellen eines rohrförmigen Formteils (158), umfassend die folgenden Verfahrensschritte:
- Erzeugen eines rohrförmigen Formteil-Rohlings (218) aus einem ein Fluorpolymermaterial enthaltenden Material;
- Verbinden eines Stützschlauchs (208) mit dem Formteil-Rohling (218) zu einem Festverbund in mindestens einem Verbundabschnitt (212, 212'), wobei der Stützschlauch (208) in mindestens einem Nicht-Verbundabschnitt (214) nicht mit dem Formteil-Rohling (218) zu einem Festverbund verbunden wird.

41. Verfahren nach Anspruch 40, **dadurch gekennzeichnet, dass** der Stützschlauch (208) in mindestens einem Verbundabschnitt (212, 212') mittels eines thermoplastischen Schmelzklebers mit dem Formteil-Rohling (218) verschweißt wird.

42. Verfahren nach einem der Ansprüche 40 oder 41, **dadurch gekennzeichnet, dass** der Stützschlauch (208) in mindestens einem Verbundabschnitt (212, 212') an den Formteil-Rohling (218) anvulkanisiert wird.

43. Verfahren nach einem der Ansprüche 40 bis 42, **dadurch gekennzeichnet, dass** der Stützschlauch (208) in mindestens einem Verbundabschnitt (212, 212') mittels eines Klebers mit dem Formteil-Rohling (218) verklebt wird.

44. Verfahren nach einem der Ansprüche 40 bis 43, **dadurch gekennzeichnet, dass** der Formteil-Rohling (218) durch Blasformen erzeugt wird.

45. Verfahren nach einem der Ansprüche 40 bis 44, **dadurch gekennzeichnet, dass** der Stützschlauch (208) nach der Erzeugung des Formteil-Rohlings (218) mit dem Formteil-Rohling (218) verbunden wird.

46. Verfahren nach einem der Ansprüche 40 bis 44, **dadurch gekennzeichnet, dass** der Stützschlauch (208) während der Erzeugung des Formteil-Rohlings (218) mit dem Formteil-Rohling (218) verbunden wird.

47. Verfahren nach Anspruch 46, **dadurch gekennzeichnet, dass** der Formteil-Rohling (218) zumindest teilweise durch Formteilspritzen erzeugt wird.

## Claims

1. Tubular moulding with a wall (200), wherein the wall (200) comprises a composite, which comprises a plastics material layer (202), which is formed from a material containing a fluoropolymer material, and a reinforcement layer (204), and wherein the moulding (158) has at least one composite portion (212, 212'), in which the reinforcement layer (204) and the plastics material layer (202) are connected to one another with a rigid bond, and at least one non-composite portion (214), in which the reinforcement layer (204) and the plastics material layer (202) are not connected to one another with a rigid bond,
**characterised in that**
the plastics material layer (202) is formed from a tubular moulding blank (218) and the reinforcement layer (204) is formed from a support hose (208).

2. Moulding according to claim 1, **characterised in that** the reinforcement layer (204) at least partially surrounds the plastics material layer (202).

3. Moulding according to either of claims 1 or 2, **characterised in that** the plastics material layer (202) is configured so as to be self-supporting.

4. Moulding according to any one of claims 1 to 3, **characterised in that** the reinforcement layer (204) is configured so as to be self-supporting.

5. Moulding according to any one of claims 1 to 4, **characterised in that** the reinforcement layer (204) comprises a woven fabric, hosiery fabric, knitted fabric, tangle fabric or braided fabric or a winding.

6. Moulding according to any one of claims 1 to 5, **characterised in that** the reinforcement layer (204) contains a fibre glass material, a carbon fibre material, an aramid fibre material and/or a fibre material made of a thermoplastic plastics material.

7. Moulding according to any one of claims 1 to 6, **characterised in that** a connecting layer (206) is arranged between the plastics material layer (202) and the reinforcement layer (204).

8. Moulding according to claim 7, **characterised in that** the connecting layer (206) contains a thermoplastic plastics material.

9. Moulding according to either of claims 7 or 8, **characterised in that** the connecting layer (206) contains a fluorothermoplastics material, in particular PFA, FEP, MFA or modified PTFE.

10. Moulding according to any one of claims 1 to 9, **characterised in that** the moulding (158) has at least one flexible zone (162).

11. Moulding according to claim 10, **characterised in that** the flexible zone (162) comprises a bellows arrangement (164).

12. Moulding according to any one of claims 1 to 11, **characterised in that** the moulding (158) comprises at least one rigid zone (160).

13. Moulding according to claim 12, **characterised in that** the rigid zone (160) has at least one curved portion (170).

14. Moulding according to any one of claims 1 to 13, **characterised in that** the moulding (158) is blow-moulded.

15. Moulding according to any one of claims 1 to 14, **characterised in that** the moulding (158) is moulded at a temperature above the crystallite melting temperature of the starting material of the plastics material layer (202).

16. Moulding according to any one of claims 1 to 15, **characterised in that** the plastics material layer (202) is formed from a PTFE compound and/or a modified polytetrafluoroethylene compound.

17. Moulding according to claim 16, **characterised in that** the PTFE compound or the modified polytetrafluoroethylene compound contains a black pigment, preferably carbon black.

18. Moulding according to any one of claims 1 to 17, **characterised in that** the moulding (158) is thermally stable at an operating temperature of at least 200°C, preferably at least 250°C.

19. Moulding according to any one of claims 1 to 18, **characterised in that** the moulding (158) is mechanically stable at an internal operating pressure of at least 2 bar, preferably of at least 2.5 bar.

20. Moulding according to any one of claims 1 to 19, **characterised in that**, in at least one non-composite portion (214), the reinforcement layer (204) loosely surrounds the plastic material layer (202).

21. Moulding according to any one of claims 1 to 20, **characterised in that** the moulding (158) has at least two composite portions (212, 212'), between which a non-composite portion (214) is arranged.

22. Moulding according to claim 21, **characterised in that** the reinforcement layer (204) of a first composite portion (212) and the reinforcement layer (204) of a second composite portion (212') are configured in one piece with one another.

23. Moulding according to any one of claims 1 to 22, **characterised in that** at least one composite portion (212, 212') is arranged at an end region of the moulding (158).

24. Moulding according to any one of claims 1 to 23, **characterised in that** the moulding (158) has at least one flexible zone (162) and at least one non-composite portion (214) is arranged in the flexible zone (162).

25. Moulding according to any one of claims 1 to 24, **characterised in that** the moulding (158) has at least one rigid zone (160) and at least one composite portion (212) is arranged in the rigid zone (160).

26. Moulding according to any one of claims 1 to 25, **characterised in that**, in at least one composite portion (212, 212'), the reinforcement layer (204) is secured in a material-uniting manner relative to the plastics material layer (202).

27. Moulding according to any one of claims 1 to 26, **characterised in that**, in at least one composite portion (212, 212'), the reinforcement layer (204) is welded to the plastics material layer (202) by means of a thermoplastic hot-melt adhesive.

28. Moulding according to any one of claims 1 to 27, **characterised in that**, in at least one composite portion (212, 212'), the reinforcement layer (204) is vulcanised to the plastics material layer (202).

29. Moulding according to any one of claims 1 to 28, **characterised in that**, in at least one composite portion (212, 212'), the reinforcement layer (204) is adhered to the plastics material layer (202) by means of an adhesive.

30. Moulding according to any one of claims 1 to 29, **characterised in that** at least one composite portion (212, 212') is formed by injection moulding.

31. Moulding according to any one of claims 1 to 30, **characterised in that** the moulding (158) is provided with at least one reinforcement ring (194; 220).

32. Moulding according to any one of claims 1 to 31, **characterised in that** at least one reinforcement ring (194; 220) is arranged in a non-composite portion (214) of the moulding (158).

33. Moulding according to either of claims 31 or 32, **characterised in that** at least one reinforcement ring (194) is arranged between the plastics material layer (202) and the reinforcement layer (204).

34. Moulding according to any one of claims 31 to 33, **characterised in that** at least one reinforcement ring (220) surrounds the reinforcement layer (204).

35. Moulding according to any one of claims 31 to 34, **characterised in that** the moulding (158) is provided with a plurality of reinforcement rings (194; 220), which are spaced apart from one another in the longitudinal direction (168) of the moulding (158).

36. Moulding according to claim 35, **characterised in that** at least two reinforcement rings (220) are connected to one another.

37. Moulding according to any one of claims 31 to 36, **characterised in that** at least one reinforcement ring (220) is configured in multiple parts.

38. Moulding according to any one of claims 1 to 37, **characterised in that**, in at least one non-composite portion (214), the reinforcement layer (204) comprises a support material in the form of a woven fabric, hosiery fabric, knitted fabric, tangle fabric, braided fabric or a winding and the support material is provided with a rubber coating.

39. Assembly, comprising an exhaust gas turbocharger (110) and an intercooler (136) for an internal combustion engine (100) and a hot-side charge-air line (132) connecting the exhaust gas turbocharger (100) to a charge-air inlet (134) of the intercooler (136), **characterised in that** the hot-side charge-air line (132) comprises a tubular moulding (158) according to any one of claims 1 to 38.

40. Method for producing a tubular moulding (158), comprising the following method steps:
- producing a tubular moulding blank (218) made of a material containing a fluoropolymer material;
- connecting a support hose (208) to the moulding blank (218) to form a rigid bond in at least one composite portion (212, 212'), wherein the support hose (208), in at least one non-composite portion (214), is not connected to the moulding blank (218) to form a rigid bond.

41. Method according to claim 40, **characterised in that** the support hose (208), in at least one composite portion (212, 212') is welded to the moulding blank (218) by means of a thermoplastic hot-melt adhesive.

42. Method according to either of claims 40 or 41, **characterised in that** the support hose (208), in at least one composite portion (212, 212'), is vulcanised to the moulding blank (218).

43. Method according to any one of claims 40 to 42, **characterised in that** the support hose (208), in at least one composite portion (212, 212'), is adhered to the moulding blank (218) by means of an adhesive.

44. Method according to any one of claims 40 to 43, **characterised in that** the moulding blank (218) is produced by blow moulding.

45. Method according to any one of claims 40 to 44, **characterised in that** the support hose (208) is connected to the moulding blank (218) after production of the moulding blank (218).

46. Method according to any one of claims 40 to 44, **characterised in that** the support hose (208) is connected to the moulding blank (218) during production of the moulding blank (218).

47. Method according to claim 46, **characterised in that** the moulding blank (218) is at least partially produced by injection moulding.

## Revendications

1. Pièce moulée tubulaire avec une paroi (200),
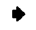 la paroi (200) comportant un assemblage qui comporte une couche de plastique (202) qui est constituée d'un matériau contenant un matériau polymère fluoré, et une couche de renforcement (204) et
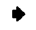 la pièce moulée (158) présentant au moins une section d'assemblage (212, 212'), dans laquelle la couche de renforcement (204) et la couche de plastique (202) sont reliées l'une à l'autre en un assemblage fixe, et au moins une section de non assemblage (214), dans laquelle la couche de renforcement (204) et la couche de plastique (202) ne sont pas reliées l'une à l'autre en un assemblage fixe,
**caractérisée en ce que** la couche de plastique (202) est constituée d'une ébauche de pièce moulée (218) tubulaire et la couche de renforcement (204) est constituée d'un tuyau d'appui (208).

2. Pièce moulée selon la revendication 1, **caractérisée en ce que** la couche de renforcement (204) entoure au moins en partie la couche de plastique (202).

3. Pièce moulée selon l'une quelconque des revendications 1 ou 2, **caractérisée en ce que** la couche de plastique (202) est réalisée autoporteuse.

4. Pièce moulée selon l'une quelconque des revendications 1 à 3, **caractérisée en ce que** la couche de renforcement (204) est réalisée autoporteuse.

5. Pièce moulée selon l'une quelconque des revendications 1 à 4, **caractérisée en ce que** la couche de renforcement (204) comporte un tissu, un maillage, un tricotage, un enchevêtrement ou un tissage ou un enroulement.

6. Pièce moulée selon l'une quelconque des revendications 1 à 5, **caractérisée en ce que** la couche de renforcement (204) contient un matériau de fibre de verre, un matériau de fibre de carbone, un matériau de fibre d'Aramide et/ou un matériau de fibre en un matériau thermoplastique.

7. Pièce moulée selon l'une quelconque des revendications 1 à 6, **caractérisée en ce qu'**une couche de liaison (206) est disposée entre la couche de plastique (202) et la couche de renforcement (204).

8. Pièce moulée selon la revendication 7, **caractérisée en ce que** la couche de liaison (206) contient un matériau thermoplastique.

9. Pièce moulée selon l'une quelconque des revendications 7 ou 8, **caractérisée en ce que** la couche de liaison (206) contient un matériau thermoplastique fluoré, en particulier du PFA, FEP, MFA ou PTFE modifié.

10. Pièce moulée selon l'une quelconque des revendications 1 à 9, **caractérisée en ce que** la pièce moulée (158) présente au moins une zone flexible (162).

11. Pièce moulée selon la revendication 10, **caractérisée en ce que** la zone flexible (162) comporte un soufflet (164).

12. Pièce moulée selon l'une quelconque des revendications 1 à 11, **caractérisée en ce que** la pièce moulée (158) comporte au moins une zone rigide (160).

13. Pièce moulée selon la revendication 12, **caractérisée en ce que** la zone rigide (160) présente au moins une section cintrée (170).

14. Pièce moulée selon l'une quelconque des revendications 1 à 13, **caractérisée en ce que** la pièce moulée (158) est soufflée.

15. Pièce moulée selon l'une quelconque des revendications 1 à 14, **caractérisée en ce que** la pièce moulée (158) est formée à une température supérieure à la température de fusion de la cristallite du matériau initial de la couche de plastique (202).

16. Pièce moulée selon l'une quelconque des revendications 1 à 15, **caractérisée en ce que** la couche de plastique (202) est formée par un assemblage de PTFE et/ou par un assemblage de polytétrafluoréthylène modifié.

17. Pièce moulée selon la revendication 16, **caractérisée en ce que** l'assemblage de PTFE ou l'assemblage de polytétrafluoréthylène modifié contient un pigment noir, de préférence du noir de carbone.

18. Pièce moulée selon l'une quelconque des revendications 1 à 17, **caractérisée en ce que** la pièce moulée (158) est thermiquement stable à une température de fonctionnement d'au moins 200 °C, de préférence d'au moins 250 °C.

19. Pièce moulée selon l'une quelconque des revendications 1 à 18, **caractérisée en ce que** la pièce moulée (158) est mécaniquement stable pour une pression interne de fonctionnement d'au moins 2 bars, de préférence d'au moins 2,5 bars.

20. Pièce moulée selon l'une quelconque des revendications 1 à 19, **caractérisée en ce que** dans au moins une section de non assemblage (214), la couche de renforcement (204) entoure de manière lâche la couche de plastique (202).

21. Pièce moulée selon l'une quelconque des revendications 1 à 20, **caractérisée en ce que** la pièce moulée (158) présente au moins deux sections d'assemblage (212, 212') entre lesquelles une section de non assemblage (214) est disposée.

22. Pièce moulée selon la revendication 21, **caractérisée en ce que** la couche de renforcement (204) d'une première section d'assemblage (212) et la couche de renforcement (204) d'une seconde section d'assemblage (212') sont réalisées d'un seul tenant l'une avec l'autre.

23. Pièce moulée selon l'une quelconque des revendications 1 à 22, **caractérisée en ce qu'**au moins une section d'assemblage (212, 212') est disposée sur une zone d'extrémité de la pièce moulée (158).

24. Pièce moulée selon l'une quelconque des revendications 1 à 23, **caractérisée en ce que** la pièce moulée (158) présente au moins une zone flexible (162) et au moins une section de non assemblage (214) est disposée dans la zone flexible (162).

25. Pièce moulée selon l'une quelconque des revendications 1 à 24, **caractérisée en ce que** la pièce moulée (158) présente au moins une zone rigide (160) et au moins une section d'assemblage (212) est disposée dans la zone rigide (160).

26. Pièce moulée selon l'une quelconque des revendications 1 à 25, **caractérisée en ce que** dans au moins une section d'assemblage (212, 212'), la couche de renforcement (212, 212') est fixée par liaison de matière par rapport à la couche de plastique (202).

27. Pièce moulée selon l'une quelconque des revendications 1 à 26, **caractérisée en ce que** dans au moins une section d'assemblage (212, 212'), la couche de renforcement (204) est soudée au moyen d'une colle fusible thermoplastique à la couche de plastique (202).

28. Pièce moulée selon l'une quelconque des revendications 1 à 27, **caractérisée en ce que** dans au moins une section d'assemblage (212, 212'), la couche de renforcement (204) est vulcanisée sur la couche plastique (202).

29. Pièce moulée selon l'une quelconque des revendications 1 à 28, **caractérisée en ce que** dans au moins une section d'assemblage (212, 212'), la couche de renforcement (204) est collée au moyen d'une colle à la couche de plastique (202).

30. Pièce moulée selon l'une quelconque des revendications 1 à 29, **caractérisée en ce qu'**au moins une section d'assemblage (212, 212') est formée par injection de pièce moulée.

31. Pièce moulée selon l'une quelconque des revendications 1 à 30, **caractérisée en ce que** la pièce moulée (158) est pourvue d'au moins une bague de renforcement (194 ; 220).

32. Pièce moulée selon l'une quelconque des revendications 1 à 31, **caractérisée en ce qu'**au moins une bague de renforcement (194 ; 220) est disposée dans une section de non assemblage (214) de la pièce moulée (158).

33. Pièce moulée selon l'une quelconque des revendications 31 ou 32, **caractérisée en ce qu'**au moins une bague de renforcement (194) est disposée entre la couche de plastique (202) et la couche de renforcement (204).

34. Pièce moulée selon l'une quelconque des revendications 31 à 33, **caractérisée en ce qu'**au moins une bague de renforcement (220) entoure la couche de renforcement (204).

35. Pièce moulée selon l'une quelconque des revendications 31 à 34, **caractérisée en ce que** la pièce moulée (158) est pourvue de plusieurs bagues de renforcement (194 ; 220) qui sont espacées l'une de l'autre dans le sens longitudinal (168) de la pièce moulée (158).

36. Pièce moulée selon la revendication 35, **caractérisée en ce qu'**au moins deux bagues de renforcement (220) sont reliées l'une à l'autre.

37. Pièce moulée selon l'une quelconque des revendications 31 à 36, **caractérisée en ce qu'**au moins une bague de renforcement (220) est réalisée en plusieurs parties.

38. Pièce moulée selon l'une quelconque des revendications 1 à 37, **caractérisée en ce que** dans au moins une section de non assemblage (214), la couche de renforcement (204) comporte un matériau d'appui sous la forme d'un tissu, un maillage, un tricotage, un enchevêtrement, un tissage ou un enroulement et le matériau d'appui est pourvu d'un engommage.

39. Ensemble comportant un turbocompresseur à gaz d'échappement (110) et un refroidisseur d'air de suralimentation (136) pour un moteur à combustion interne (100) et une conduite d'air de suralimentation (132) côté chaleur reliant le turbocompresseur à gaz d'échappement (100) à une admission d'air de suralimentation (134) du refroidisseur d'air de suralimentation (136), **caractérisé en ce que** la conduite d'air de suralimentation (132) côté chaleur comporte une pièce moulée (158) tubulaire selon l'une quelconque des revendications 1 à 38.

40. Procédé de fabrication d'une pièce moulée tubulaire (158) comportant les étapes suivantes de procédé consistant à :
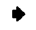 générer une ébauche de pièce moulée tubulaire (218) en un matériau contenant un matériau polymère fluoré ;
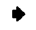 relier un tuyau d'appui (208) à l'ébauche de pièce moulée (218) en un assemblage fixe dans au moins une section d'assemblage (212, 212'), le tuyau d'appui (208) n'étant pas relié dans au moins une section de non assemblage (214) à l'ébauche de pièce moulée (218) en un assemblage fixe.

41. Procédé selon la revendication 40, **caractérisé en ce que** le tuyau d'appui (208) est soudé dans une section d'assemblage (212, 212') au moyen d'une colle fusible thermoplastique à l'ébauche de pièce moulée (218).

42. Procédé selon l'une quelconque des revendications 40 ou 41, **caractérisé en ce que** le tuyau d'appui (208) est vulcanisé dans au moins une section d'assemblage (212, 212') sur l'ébauche de pièce moulée (218).

43. Procédé selon l'une quelconque des revendications 40 à 42, **caractérisé en ce que** le tuyau d'appui (208) est collé dans au moins une section d'assemblage (212, 212') au moyen d'une colle à l'ébauche de pièce moulée (218).

44. Procédé selon l'une quelconque des revendications 40 à 43, **caractérisé en ce que** l'ébauche de pièce moulée (218) est générée par soufflage.

45. Procédé selon l'une quelconque des revendications 40 à 44, **caractérisé en ce que** le tuyau d'appui (208) est relié après la génération de l'ébauche de pièce moulée (218), à l'ébauche de pièce moulée (218).

46. Procédé selon l'une quelconque des revendications 40 à 44, **caractérisé en ce que** le tuyau d'appui (208) est relié pendant la génération de l'ébauche de pièce moulée (218), à l'ébauche de pièce moulée (218).

47. Procédé selon la revendication 46, **caractérisé en ce que** l'ébauche de pièce moulée (218) est générée au moins en partie par injection de pièce moulée.
